# EUROPÄISCHE PATENTSCHRIFT

(11) **EP 4 569 613 B1**
(45) Veröffentlichungstag und Bekanntmachung des Hinweises auf die Patenterteilung: **24.12.2025**
(21) Anmeldenummer: 23787125.6
(22) Anmeldetag: 11.10.2023
(51) Int. Cl.: H02S 30/10

(54) **MODULHALTERUNG UND ZUGEHÖRIGE PHOTOVOLTAIK-ANLAGE**
MODULE HOLDER AND ASSOCIATED PHOTOVOLTAIC SYSTEM
SUPPORT DE MODULE ET SYSTÈME PHOTOVOLTAÏQUE ASSOCIÉ

(30) Priorität: 14.10.2022 DE 102022127018
(43) Veröffentlichungstag der Anmeldung: 18.06.2025
(73) Patentinhaber: Next2Sun Technology GmbH, 66763 Dillingen (DE)
(72) Erfinder: BENDIX, Peter, 66763 Dillingen (DE); HILDEBRANDT, Heiko, 66763 Dillingen (DE); HOFF, Florian, 66763 Dillingen (DE); SCHNEIDER, Thomas, 66763 Dillingen (DE); OLLINGER, Stefan, 66763 Dillingen (DE)
(74) Vertreter: Mertzlufft-Paufler, Cornelius
(86) Internationale Anmeldenummer: PCT/EP2023/078205
(87) Internationale Veröffentlichungsnummer: WO 2024/079195

(56) Entgegenhaltungen:
- CN-U- 206 850 713
- DE-A1- 102016 015 436
- KR-A- 20210 117 913

## Beschreibung

Die Erfindung betrifft eine Modulhalterung samt zugehörigem bifazialen Photovoltaik (PV)-Modul, die zusammen als ein (Montage-) Set aufgefasst werden können. Hierbei ist das Photovoltaik-Modul als ein rahmenloses Laminat ausgestaltet und weist eine aktive Fläche auf, die von einer Vorderseite und von einer Rückseite des Photovoltaik-Moduls her Sonnenlicht empfangen kann, um das Sonnenlicht in elektrischen Strom umzuwandeln. Die Modulhalterung bietet hingegen eine Aufnahme, in welche ein äußerer Rand des Photovoltaik-Moduls in einer Einsetzrichtung eingesetzt und so in Position gehalten ist. Dabei ist die Aufnahme, bezogen auf eine Ebene der aktiven Fläche des Photovoltaik-Moduls, vorderseitig durch einen vorderen Schenkel und/oder rückseitig durch einen hinteren Schenkel der Modulhalterung begrenzt.

Derartige Modulhalterungen sind vorbekannt; diese werden aber bislang hauptsächlich für monofaziale PV-Module eingesetzt, die so aufgestellt werden, dass sie im Wesentlichen nur von einer Seite her Sonnenlicht empfangen können.

Die Erfindung betrifft ferner eine Photovoltaik-Anlage mit mehreren solcher bifazialen PV-Module, die jeweils als ein rahmenloses Laminat ausgestaltet sind und die aufrecht stehend (also in senkrechter Orientierung) an einer Tragkonstruktion angeordnet sind. Hierbei umfasst die Tragkonstruktion mehrere Pfosten, die an oder im Erdreich befestigt, insbesondere verankert, sind, wobei an den Pfosten Riegel befestigt sind, die jeweils zwei benachbarte Pfosten miteinander (direkt oder vermittelt durch Adapterelemente) verbinden. Diese Riegel verlaufen somit im Wesentlichen horizontal, während die Pfosten vertikal verlaufen. Die Modulhalterung ist dabei zum sicheren Halten des PV-Moduls vorgesehen. Die Modulhalterung kann dabei an einem Riegel und/oder einem Pfosten einer Tragkonstruktion einer PV-Anlage befestigt sein. Mit anderen Worten kann die Modulhalterung also dazu dienen, das zugehörige bifaziale PV-Modul an der Tragkonstruktion, insbesondere an wenigstens einem Riegel und/oder an wenigstens einem Pfosten der Tragkonstruktion zu befestigen.

Auch solche PV-Anlagen sind bereits zur Erzeugung von Solarstrom in Gebrauch. Bei solchen Anlagen wird die Modulebene, also die Ebene, in welcher die aktiven Flächen der PV-Module liegen, oftmals in Nord-Süd-Richtung ausgerichtet. Dies hat den Vorteil, dass die PV-Module in frühen Morgenstunden flach einfallendes Sonnenlicht aus östlichen Richtungen auf Ihrer Vorderseite auffangen können. In den Abendstunden, wenn das Sonnenlicht flach aus westlichen Richtungen einfällt, können die bifazial ausgestalteten PV-Module hingegen das Sonnenlicht auf Ihrer Rückseite auffangen. Dadurch kann eine Stromkurve des mit der PV-Anlage generierten Solarstroms erhalten werden, die vor und nach den Mittagsstunden ein jeweiliges Maximum zeigt. Je höher die Sonne über dem Horizont steht, umso steiler wird dabei der Einfallswinkel der Sonnenstrahlen (in Bezug auf die Erdoberfläche), die auf die Vorder- oder Rückseite des jeweiligen PV-Moduls einfallen.

Aktuell besteht eine Tendenz, PV-Module von immer größerer Fläche, beispielsweise von mehr als zwei Quadratmeter, zu verbauen. Für solche großflächigen PV-Module besteht bei bisherigen Tragkonstruktionen auf Basis von Pfosten, die über Riegel miteinander verbunden sind, das Problem, dass sich das jeweilige PV-Modul unter Windlast unter Umständen so stark durchbiegt, dass es nicht mehr sicher an den Riegeln gehalten werden kann. Ein weiterer anhaltender Trend besteht darin, die Effizienz der solaren Stromproduktion immer weiter zu steigern, weil die Erzeugung von elektrischem Strom über erneuerbare Energien immer wertvoller wird.

Aus CN 206850713 U ist ein mit einem Rahmen versehenes bifaziales PV-Modul vorbekannt, dessen Rahmen mittels C-förmiger Halteelemente auf einer Tragkonstruktion befestigt wird. Hierbei greifen die Halteelemente am Rahmen des PV-Moduls an, welcher seinerseits das Laminat des PV-Moduls einrahmt und einfasst.

DE 10 2016 015 436 A1 beschreibt eine Tragkonstruktion aus vertikalen Pfosten und horizontal verlaufenden Riegeln, die zum Tragen bifazialer aufrechtstehender PV-Module konzipiert ist. Hierbei wird zur Vermeidung von Verschattung der PV-Module vorgeschlagen, die Unterseiten der horizontal verlaufenden und als Längsprofile ausgestalteten Riegel abzuschrägen und gegebenenfalls die PV-Module direkt in entsprechende Aufnahmenuten der Riegel einzusetzen.

Von diesem Hintergrund ausgehend hat es sich die Erfindung zur Aufgabe gemacht, zu beiden beschriebenen Problemstellungen einen technischen Beitrag zu leisten. Die Erfindung soll somit eine Tragkonstruktion bereitstellen, die hohe Windlasten auch bei sehr großer Modulgröße sicher aufnehmen kann und gleichzeitig eine hohe elektrische Effizienz der PV-Anlage ermöglicht. Hierbei soll ein wie zuvor beschriebenes (Montage-)Set bereitgestellt werden, welches in die Tragkonstruktion integriert werden kann, um so die PV-Module innerhalb der Tragkonstruktion anzuordnen.

Zur Lösung dieser Aufgabe sind erfindungsgemäß bei einem Set aus einer Modulhalterung und einem zugehörigen bifazial ausgestalteten PV-Modul die Merkmale von Anspruch 1 vorgesehen. Insbesondere wird somit erfindungsgemäß zur Lösung der Aufgabe bei einem Set der eingangs genannten Art vorgeschlagen, dass jeweilige vorder- und rückseitige Außenpunkte eines senkrecht zu einer Ebene der aktiven Fläche verlaufenden Querschnitts der Modulhalterung in der Einsetzrichtung und bezogen auf jeweilige modulseitige Spitzen der beiden Schenkel zurückversetzt sind. Hierbei sind die besagten Außenpunkte diejenigen Außenpunkte des Querschnitts der Modulhalterung, die für eine Verschattung der aktiven Fläche relevant sind, die durch die Modulhalterung verursacht wird.

Der axiale Versatz dieser Außenpunkte entlang der Einsetzrichtung zur jeweiligen Spitze des vorderbeziehungsweise rückseitigen Schenkels kann dabei bevorzugt mindestens das 1.2-fache, bevorzugt mindestens das 1.5-fache, oder sogar mindestens das 2.0-fache, einer Mindestbreite der Aufnahme betragen. Beispielsweise kann bei einer erfindungsgemäßen Modulhalterung mit einer Mindestbreite (beziehungsweise Einschubbreite) der Aufnahme von 5 mm (dies entspricht somit einer maximalen Stärke des PV-Moduls am Rand, welches noch in die Aufnahme eingeschoben werden kann) der axiale Versatz der Außenpunkte 11 mm betragen, also das 11/5 = 2.2-fache der Mindestbreite der Aufnahme.

Bei solchen Ausgestaltungen kann somit eine Einhüllende, die für die Verschattung der aktiven Fläche durch die Modulhalterung relevant ist, und die eine Außenkontur der Modulhalterung einhüllt, in Richtung der Einsetzrichtung gesehen eine konvexe Form zeigen. Mit anderen Worten nimmt somit eine laterale Breite der Einhüllenden, quer zu einer Ebene der aktiven Fläche, in der Einsetzrichtung monoton zu. Die Einhüllende der Modulhalterung zeigt somit modulseitig Ihre geringste laterale Breite. Anders beschrieben läuft die Einhüllende der Modulhalterung somit - entgegen der Einsetzrichtung - monoton auf das PV-Moduls hin zu, und zwar sowohl von der Vorderseite als auch von der Rückseite des PV-Moduls aus gesehen. Die Form der Einhüllenden könnte beispielsweise ermittelt werden, indem gedanklich oder tatsächlich ein Tuch oder eine Folie von der Einsetzrichtung her über die Modulhalterung gelegt und dabei in Richtung der Einsetzrichtung gespannt wird. Die Einhüllende kann so die für die Verschattung der aktiven Fläche relevante Kontur definieren, die für Sonnenstrahlen die möglichen Einfallswinkel auf die aktive Fläche begrenzt.

Durch solche Ausgestaltungen kann die von der Modulhalterung ausgehende Verschattungswirkung auf die aktive Fläche des bifazialen PV-Moduls minimiert werden. Insbesondere kann so eine Verschattungsfreiheit der aktiven Fläche bis zu seitlichen oder vertikalen maximalen verschattungsfreien Einfallswinkeln von mindestens 110° erreicht sein, und zwar bezogen auf die Vorder- als auch auf die Rückseite des PV-Moduls. Gleichzeitig kann die Modulhalterung mit hoher mechanischer Festigkeit ausgebildet werden, sodass die Modulhalterung das labile PV-Modul stabilisieren kann, insbesondere wenn hohe Windlasten auf das PV-Modul einwirken.

Viele der bislang auf dem Markt erhältlichen Modulrahmen führen hingegen, sofern sie zum Halten bifazialer PV-Module eingesetzt werden, zu einer Verschattung der aktiven Flächen auf der Modulrückseite, sodass insbesondere bei einem flachen Einfallswinkel auf das PV-Modul der aus dem Modulrahmen resultierende Schatten maßgeblich leistungsmindernd auf die solare Stromproduktion wirkt.

Um die Anfälligkeit der Verschattung der aktiven Fläche bei Überschreiten der verschattungsfreien maximalen Einfallswinkel zu verringern, ist es zudem vorteilhaft, wenn sich jeweilige laterale Abstände, die die Außenpunkte zur Ebene der aktiven Fläche einnehmen, um weniger als 25%, bevorzugt um weniger als 15% unterscheiden. Denn dadurch kann ein Querschnitt der Modulhalterung erhalten werden, bei dem ein jeweiliger lateraler Abstand zwischen der Modulebene und der Modulhalterung (oftmals als lateraler Zellebene-Rahmenabstand bezeichnet) minimiert ist. Dies ist vorteilhaft, denn je kleiner der laterale Abstand zwischen der Modulebene und der Modulhalterung gewählt ist, umso kleiner wird auch die Verschattungslänge der aktiven Fläche (gemessen in der Ebene der aktiven Fläche) ausfallen (in Abhängigkeit des Einfallswinkels von Sonnenstrahlen), wenn der maximale verschattungsfreie Einfallswinkel überschritten wird. Dadurch wird also die Anfälligkeit des Sets gegen Verschattung wesentlich vermindert.

Durch solche Ausgestaltungen kann insbesondere erreicht werden, dass die maximalen verschattungsfreien Einfallswinkel (unter denen Sonnenstrahlen die aktive Fläche von der Vorderseite oder der Rückseite her erreichen können), gemessen in Bezug auf die aktive Fläche, wenigstens 120°, bevorzugt sogar wenigstens 135°, betragen.

Eine erfindungsgemäße Modulhalterung kann quer zur Einsetzrichtung und quer zu einer Flächennormalen der aktiven Fläche (also in einer Richtung entlang des äußeren Rands des PV-Moduls) beispielsweise mehr als dreimal länger ausgestaltet sein als die Tiefe der Modulhalterung in der Einsetzrichtung. Dadurch kann die Aufnahme die Form eines länglichen Schlitzes annehmen. Die Aufnahme selbst kann dabei mindestens 1.5-fach oder sogar mindestens 2.0-fach so tief in der Einsetzrichtung ausgestaltet sein, als eine Mindestbreite der Aufnahme in Richtung einer Flächennormalen der aktiven Fläche. Dadurch kann ein sicheres Umfassen des äußeren Rands des PV-Moduls gewährleistet werden.

Es sei an dieser Stelle ferner noch erwähnt, dass eine erfindungsgemäße Modulhalterung auch zweiteilig ausgebildet sein kann. Hierbei kann ein vorderseitiger Teil der Modulhalterung den vorderen Schenkel der Aufnahme ausbilden und ein rückseitiger Teil der Modulhalterung den hinteren Schenkel. Die beiden Teile können sich dabei entlang des äußeren Rands des PV-Moduls überlappen (dann wird das PV-Modul zumindest in dem Überlappungsbereich beidseitig gehalten) oder aber beabstandet voneinander sein (in diesem Fall wird der äußere Rand des PV-Moduls abschnittsweise vorder- und abschnittsweise rückseitig von der Modulhalterung gehalten). Bevorzugt sind aber Ausgestaltungen, bei denen die jeweilige Modulhalterung einteilig ausgebildet ist und dabei sowohl einen vorderen als auch einen hinteren Schenkel der Aufnahme ausbildet.

Ferner kann eine erfindungsgemäße Modulhalterung auch je zwei sich gegenüberliegende Aufnahmen ausbilden, nämlich dann, wenn die Modulhalterung dazu ausgelegt ist, zwei benachbarte PV-Module direkt miteinander zu verbinden. In diesem Fall ist also in jeder der beiden Aufnahmen ein jeweiliges PV-Modul eingesteckt.

Das Verhältnis zwischen einer maximalen Breite der Modulhalterung in Richtung der Einsetzrichtung und einer maximalen Einstecktiefe der Aufnahme kann dabei beispielsweise Werte annehmen zwischen 1.20 und 2.80. Ein Abstand des äußeren Rands des PV-Moduls zu einem Anschlag innerhalb der Aufnahme, der von der Modulhalterung ausgebildet ist, kann dabei zum Beispiel 1-2 mm betragen.

Die Modulhalterung kann ferner dazu eingesetzt werden, eine Längs- oder Querseite des PV-Moduls, entweder abschnittsweise oder vollständig, zu stabilisieren. Je nach Ausgestaltung kann sich die Länge der Aufnahme somit quer zur Einsetzrichtung über eine gesamte Länge einer Längsseite oder Querseite des PV-Moduls erstrecken. In diesem Fall umgreift die Modulhalterung somit die gesamte Längs- oder Querseite des PV-Moduls.

Das jeweilige von der jeweiligen Modulhalterung gehaltene PV-Modul ist wie erwähnt als ein rahmenloses Laminat ausgestaltet; es kann insbesondere als ein Glas-Laminat ausgestaltet sein. Hierbei kann die aktive Fläche in das Laminat integriert sein. Die aktive Fläche kann dabei zum Beispiel auf einer Seite lediglich durch eine Folie abgedeckt sein.

Ferner kann die aktive Fläche insbesondere versetzt zu einer Mittelebene des PV-Moduls angeordnet sein. Dadurch können sich selbst bei symmetrischer Ausgestaltung der Modulhalterung und mittiger Platzierung des PV-Moduls in der Aufnahme der Modulhalterung unterschiedliche maximale verschattungsfreie Einfallswinkel ergeben, unter denen Sonnenlicht den äußeren Rand der aktiven Fläche noch erreichen kann, wenn das PV-Modul in die Aufnahme der Modulhalterung eingesetzt ist.

Ferner kann das PV-Modul auch mehr als eine aktive Fläche aufweisen. Die Eigenschaft "bifazial" kann hier also insbesondere derart verstanden werden, dass das PV-Modul wenigstens eine aktive Fläche (also beispielsweise auch zwei oder sogar drei aktive Flächen) aufweist, die jeweils Sonnenlicht in einen elektrischen Stromfluss / eine elektrische Spannung umwandeln kann/können. Weist das PV-Modul mehrere aktive Flächen auf, so können sich diese auch in ihrer jeweiligen spektralen Charakteristik unterscheiden, insbesondere sodass die jeweilige Fläche ein jeweiliges Lichtspektrum in elektrische Energie umwandelt. Die mehreren aktiven Flächen können dabei aufeinander laminiert sein, d.h. sie sind dann in einer Richtung senkrecht zur jeweiligen Ebene der aktiven Fläche voneinander beabstandet.

Der erfindungsgemäße Ansatz kann aber bevorzugt vorsehen, dass die aktive Fläche des PV-Moduls annähernd mittig in Bezug auf Außenmaße der Modulhalterung angeordnet ist. Beispielsweise sind Ausgestaltungen bevorzugt, bei denen ein lateraler Abstand zwischen einer Ebene der aktiven Fläche und einer Mittelebene der Modulhalterung höchstens 10% einer lateralen Gesamterstreckung der Modulhalterung beträgt. Insbesondere können somit die Ebene der aktiven Fläche und die Mittelebene der Modulhalterung zusammenfallen.

Alternativ oder aber ergänzend zu den zuvor erläuterten Merkmalen kann zur Lösung der Aufgabe das eingangs erwähnte Set auch dadurch gekennzeichnet sein, dass eine Außenkontur der Modulhalterung (d.h. insbesondere die zuvor erwähnte Außenkontur oder aber die zuvor erwähnte Einhüllende), bezogen auf eine senkrecht zu einer Ebene der aktiven Fläche verlaufende Querschnittsebene der Modulhalterung, innerhalb eines in der Querschnittsebene aufgespannten Verschattungswinkels liegt, der von einem äußeren Rand der aktiven Fläche ausgeht. Ferner ist vorgesehen, dass eine Winkelhalbierende des Verschattungswinkels mit der Ebene der aktiven Fläche einen Verkippungswinkel von betragsmäßig höchstens 15°, bevorzugt von höchstens 10°, einschließt. Der Verschattungswinkel definiert dabei die Verschattung der aktiven Fläche, die von der Modulhalterung verursacht wird.

Wenn die aktive Fläche beispielsweise in einer xz-Ebene liegt (wobei die x-Richtung einer Längsrichtung der Riegel und die z-Richtung der Längsrichtung von Pfosten einer zugehörigen Tragkonstruktion entsprechen kann, an welchen die Modulhalterung montiert werden soll), so kann die besagte Querschnittsebene die xy-Ebene sein für den Fall, dass die Modulhalterung eine vertikal verlaufende Querseite des PV-Moduls umgreift; oder beispielsweise auch die yz-Ebene, für den Fall, dass die Modulhalterung eine horizontal verlaufende Längsseite des PV-Moduls umgreift.

Die Begrenzung des Verkippungswinkels führt zu einer austarierten Verteilung der maximalen verschattungsfreien Einfallswinkel zwischen der Vorder- und Rückseite des PV-Moduls. Dadurch kann unabhängig von der Seite des Sonnenlichteinfalls eine hohe Effizienz der solaren Stromproduktion mit dem bifazialen PV-Modul erzielt werden. Die Forderung nach einem geringen Verkippungswinkel ist damit gleichbedeutend mit der Forderung, dass die aktive Fläche des PV-Moduls möglichst nahe an eine Mittelebene der Modulhalterung (die insbesondere eine Symmetrieebene sein kann) heranrücken soll.

Ein weiterer Parameter, der bei der Auslegung des Sets zu berücksichtigen ist, ist der Versatz, welcher zwischen einem äußeren Rand der aktiven Fläche und einem modulseitigen Ende der Modulhalterung besteht, wenn das PV-Modul in die Modulhalterung eingesetzt ist. Grundsätzlich besteht hier ein Zielkonflikt: Je größer der Versatz, umso kleiner wird der Verschattungswinkel ausfallen, was zunächst günstig erscheint, denn dann sinkt die Anfälligkeit gegen Verschattung. Ein größerer Versatz führt aber zum Verlust aktiver Fläche und damit zu einer geringeren Stromproduktion bei gegebener Modulgröße und gegebener Einstecktiefe des Moduls in die Modulhalterung. Die maximale (Glas-)Größe des PV-Moduls ist dabei in der Regel aufgrund der Herstellungstechnologie limitiert. Ein typischer derzeitiger Wert für den Zell-Randabstand, also den Abstand zwischen dem äußeren Rand der aktiven Fläche und dem äußeren Rand des PV-Moduls, liegt bei 18-20 mm. Zukünftig werden aber auch kleinere Zell-Randabstände von 12-14 mm möglich sein, sodass dann bei gleicher Modul-Größe grundsätzlich mehr aktive Fläche zur Verfügung stehen wird. Bei einem solch geringen Zell-Randabstand würde der besagte Versatz aber immer kleiner werden, was dann zu vermehrter Verschattung führen würde.

In einem solchen Fall wird die erfindungsgemäße Ausgestaltung der Modulhalterung immer wichtiger, weil dadurch eine übermäßige Verschattung gerade vermieden wird. Daher schlägt die Erfindung insbesondere vor, eine Einstecktiefe der Aufnahme (insbesondere unter Berücksichtigung eines Mindestabstands, zwischen einer Außenkante des PV-Moduls und eines in der Aufnahme von der Modulhalterung ausgebildeten Anschlags, von 1-2 mm) so zu wählen, dass der besagte Versatz zwischen dem äußeren Rand der aktiven Fläche und dem modulseitigen Ende der Modulhalterung nicht einschränkend wirkt auf die gewünschten maximalen verschattungsfreien Einfallswinkel (also den gewünschten jeweiligen vorder- und rückseitigen maximalen verschattungsfreien Einfallswinkel noch zulässt), die im Folgenden noch genauer erläutert werden. Hierbei kann der Versatz bevorzugt nur so groß gewählt sein, dass der Versatz höchstens 50%, bevorzugt höchstens 20%, größer ausfällt, als ein Mindestversatz, der (rein geometrisch und ohne Berücksichtigung von Toleranzen beim Einsetzen des PV-Moduls in die Modulhalterung) eingehalten werden muss, um den gewünschten maximalen verschattungsfreien Einfallswinkel zu gewährleisten. Denn in diesem Fall kann eine kompakte Ausgestaltung des Sets erhalten werden, die die nutzbare aktive Fläche pro Länge/Höhe der zugehörigen PV-Anlage optimiert.

Der zuvor erläuterte Verschattungswinkel kann idealerweise symmetrisch zu einer Mittelebene des PV-Moduls geöffnet sein (sodass die Mittelebene den Verschattungswinkel als Winkelhalbierende teilt). Je nach konkreter Ausgestaltung der Modulhalterung und/oder lateraler Lage der aktiven Fläche ist es aber auch möglich, dass der Verschattungswinkel asymmetrisch in Bezug auf die Mittelebene des -Moduls geöffnet ist; in diesem Fall ist der besagte Verkippungswinkel betragsmäßig somit > 0° (die Verkippung kann zur Vorder- oder Rückseite hin ausgestaltet sein). Dies kann insbesondere der Fall sein, wenn die jeweiligen maximalen verschattungsfreien Einfallswinkel auf die aktive Fläche auf der Vorder- und Rückseite des PV-Moduls unterschiedlich groß ausfallen.

Bei bevorzugten Ausgestaltungen beträgt der Verschattungswinkel höchstens 100° oder sogar höchstens 90°. Denn dadurch werden besonders große verschattungsfreie maximale Einfallswinkel ermöglicht. Bei einer solchen Ausgestaltung verbleiben nämlich 360°-100° = 260° = 2x 130° (bei der bevorzugten Ausgestaltung mit einem Verschattungswinkel von höchsten 90° sogar 270°= 2x 135°) zur Verfügung für den vorderseitigen und rückseitigen jeweils maximalen verschattungsfreien Einfallswinkel, unter dem Sonnenlicht noch die aktive Fläche erreichen kann, wenn das PV-Modul in die Aufnahme der Modulhalterung eingesetzt ist.

Ein übertrieben kleiner Verschattungswinkel kann in einer Modulhalterung mit zu geringer Festigkeit resultieren, was gerade kritisch ist, wenn die Modulhalterung eine labile Längsseite des PV-Moduls stabilisieren soll. Daher kann insbesondere vorgesehen sein, dass der Verschattungswinkel wenigstens 50°, bevorzugt wenigstens 60°, beträgt. Die Forderung eines solchen Mindestbetrags für den Verschattungswinkel resultiert in einer entsprechenden Steifigkeit der Modulhalterung, da die Modulhalterung so im Querschnitt ein ausreichendes Flächenträgheitsmoment aufweist.

Ergänzend oder aber alternativ zu den zuvor erläuterten Merkmalen, kann das eingangs beschriebene Set zur Lösung der Aufgabe auch dadurch gekennzeichnet sein, dass eine Außenkontur der Modulhalterung (also insbesondere die zuvor erläuterte Außenkontur der Modulhalterung) so ausgestaltet ist (insbesondere und das zugehörige PV-Modul so ausgestaltet und in der Aufnahme platziert ist), dass sowohl ein maximaler verschattungsfreier Einfallswinkel, unter dem ein einfallender Sonnenstrahl einen äußeren Rand der aktiven Fläche von der Vorderseite her erreichen kann, als auch ein maximaler verschattungsfreier Einfallswinkel, unter dem ein einfallender Sonnenstrahl den äußeren Rand der aktiven Fläche von der Rückseite her erreichen kann, jeweils, gemessen in Bezug auf die aktive Fläche, wenigstens 110°, bevorzugt wenigstens 120°, besonders bevorzugt wenigstens 135°, beträgt.

Die Wahl eines geeigneten maximalen verschattungsfreien Einfallswinkels hängt dabei maßgeblich vom geographischen Aufstellungsort des PV-Moduls sowie seiner Ausrichtung in Bezug auf die Sonne ab.

Würde man den Einfallswinkel nicht in Bezug auf die Ebene der aktiven Fläche, sondern in Bezug auf die Flächennormale der aktiven Fläche in einer senkrecht zur Ebene der aktiven Fläche stehenden Querschnittsebene messen, so ergäben sich entsprechend maximale verschattungsfreie Einfallswinkel von wenigstens 20° (=110°-90°), bevorzugt von wenigstens 30° (=120°-90°), besonders bevorzugt von wenigstens 45° (=135°-90°). Es versteht sich, dass je nach Sonnenstand, also Tageszeit, die maximalen verschattungsfreien Einfallswinkel überschritten werden können, wobei es dann am Rand der aktiven Fläche zu einer Verschattung kommt, die mit zunehmendem Einfallswinkel nicht-linear zunimmt, was in einem messbaren Leistungsverlust des PV-Moduls resultieren kann.

Wie bereits erläutert wurde ist es ferner vorteilhaft, wenn der äußere Rand der aktiven Fläche so weit von dem modulseitigen Ende der Modulhalterung distanziert ist, dass auch bei den durch die Modulhalterung vorgegebenen vorderseitigen und rückseitigen maximal verschattungsfreien Einfallswinkeln keinerlei Verschattung auf der aktiven Fläche auftritt. In diesem Fall können diese maximalen Einfallswinkel somit auch tatsächlich die gesamte aktive Fläche des PV-Moduls erreichen.

Erfindungsgemäß kann die Aufgabe auch durch weitere vorteilhafte Ausführungen gemäß den Unteransprüchen gelöst werden:
So kann beispielsweise vorgesehen sein, dass die beiden Schenkel der Modulhalterung eine jeweilige Außenkontur ausbilden, die innerhalb einer gedachten oder tatsächlichen Abschrägung verbleibt, die auf eine modulseitige Einführöffnung der Aufnahme zuläuft. Hierbei ist es bevorzugt, wenn die jeweilige Abschrägung jeweils einen Winkel zur aktiven Fläche von wenigstens 110°, bevorzugt von wenigstens 120°, besonders bevorzugt von wenigstens 135°, ausbildet. Hierbei kann die jeweilige Außenkontur eines der Schenkel stellenweise von der Abschrägung nach innen auf die Aufnahme hin abweichen.

Beispielsweise kann vorder- und rückseitig (in Bezug auf das in die Aufnahme eingesetzte PV-Modul) jeweils modulseitig (also auf der Innenseite der Modulhalterung) eine tatsächliche Abschrägung ausgebildet sein. Diese Abschrägungen erzeugen den technischen Effekt, dass die beschriebenen großen maximalen verschattungsfreien Einfallswinkel auf die aktive Fläche ermöglicht und damit eine Verschattung der aktiven Fläche durch die Modulhalterung selbst weitgehend vermieden wird. In der Einbausituation, kann die jeweilige Abschrägung so zum Beispiel einen steilen Einfall von Sonnenstrahlen von oben (beispielsweise wenn die Modulhalterung eine obere horizontal verlaufende Längsseite des PV-Moduls umgreift und die Abschrägung somit nach unten zeigt) oder einen flachen Sonnenlicht-Einfall von der Seite (beispielsweise wenn die Modulhalterung eine vertikal verlaufende Querseite des PV-Moduls umgreift und die Abschrägung somit in Richtung der Längsseite des PV-Moduls verläuft, wenn das PV-Modul im Querformat (= Längsseite des PV-Moduls ist horizontal ausgerichtet) orientiert ist) ermöglichen.

Eine erfindungsgemäße Modulhalterung kann insbesondere symmetrisch in Bezug auf eine parallel zur Ebene der aktiven Fläche verlaufende Symmetrieebene der Modulhalterung, also insbesondere mit achsensymmetrisch ausgestalteten Schenkeln, ausgestaltet sein. Dies kann Vorteile bieten, weil so die Modulhalterung in unterschiedlichen Orientierungen zum Umgreifen und Schützen des äußeren Modulrands verwendet werden kann (Kein Unterschied zwischen Vorder- und Rückseite der Modulhalterung).

Eine erfindungsgemäße Modulhalterung kann aber auch asymmetrisch in Bezug auf die Ebene der aktiven Fläche ausgestaltet sein. Dies bietet sich insbesondere dann an, wenn die aktive Fläche innerhalb des PV-Moduls zu einer Mittelebene des PV-Moduls versetzt ist. Denn in diesem Fall würden sich bei symmetrischer Ausgestaltung der Modulhalterung asymmetrische maximale verschattungsfreie Einfallswinkel für die Vorder- und Rückseite des PV-Moduls ergeben. Eine asymmetrische Ausgestaltung der Modulhalterung (etwa durch Ausbildung unterschiedlicher Abschrägungen auf der Vorder- und Rückseite und/oder durch unterschiedlich große laterale Erstreckung des vorderen beziehungsweise hinteren Schenkels) kann also genutzt werden, um sicherzustellen, dass Sonnenstrahlen sowohl von der Vorderseite als auch von der Rückseite her die aktive Fläche unter gleich großen maximalen Einfallswinkeln erreichen können, beispielsweise von jeweils mindestens 110°. Eine asymmetrische Ausgestaltung der Modulhalterung kann aber auch dann sinnvoll sein, wenn die maximal möglichen verschattungsfreien Einfallswinkel aufgrund geringer Bifazialität des PV-Modules (Rückseitenleistung der aktiven Fläche im Verhältnis zur Leistung der Vorderseite stark unterschiedlich) asymmetrisch ausgelegt werden sollen.

Die beiden Schenkel der Modulhalterung können jeweils eine laterale Erstreckung, quer zu einer Mittelebene des PV-Moduls und jeweils gemessen von der Aufnahme aus, zeigen, die wenigstens 25 %, vorzugsweise wenigstens 50 %, besonders bevorzugt wenigstens 75 %, einer Mindestbreite der Aufnahme, in Richtung einer Flächennormalen der aktiven Fläche, beträgt. Je nach Ausgestaltung kann sich dabei eine Breite der Aufnahme in der Einsetzrichtung vergrößern. Dadurch kann eine ausreichende mechanische Festigkeit erzielt werden bei gleichzeitig geringer Verschattung auf der Vorder- und Rückseite des PV-Moduls.

Die Mittelebene des PV-Moduls kann unter Umständen lateral versetzt sein zu einer Mittelebene der Aufnahme oder zu einer Mittelebene oder Symmetrieebene der Modulhalterung; dies hängt vom Aufbau des verwendeten PV-Moduls ab.

Weist das PV-Modul beispielsweise ein Format (Längsseite / Querseite) von annähernd oder sogar größer als 2:1 auf, so empfiehlt es sich, die längere Längsseite des PV-Moduls mithilfe einer erfindungsgemäßen Modulhalterung zu stabilisieren, deren Schenkel jeweils eine laterale Erstreckung von mehr als dem 0.75-fachen der Mindestbreite der Aufnahme (was mindestens der Dicke des PV-Moduls entsprechen kann) aufweisen. Zur Stabilisierung der Querseiten können dann ebenfalls erfindungsgemäß ausgestaltete Modulhalterungen eingesetzt werden; allerdings kann dort die laterale Erstreckung der Schenkel unter Umständen geringer ausfallen, weil auf die Querseite weniger Kräfte wirken und die Modulhalterung dort somit etwas weniger stabil ausgebildet werden kann.

Die jeweiligen Spitzen des vorderen und hinteren Schenkels können jeweils, entweder gleich weit oder aber unterschiedlich weit, beabstandet sein von dem äußeren Rand der aktiven Fläche, und zwar betrachtet in einer senkrecht zu einer Ebene der aktiven Fläche verlaufenden Querschnittsebene (xy- oder yz-Ebene). Bei optimaler Flächenausnutzung kann zumindest eine der Spitzen des vorderen oder hinteren Schenkels bis an die aktive Fläche heranreichen. Eine Überdeckung der aktiven Fläche durch die Modulhalterung sollte jedoch in jedem Fall vermieden werden, um Leistungsverluste durch Verschattung zu vermeiden.

Eine erfindungsgemäße Modulhalterung kann quer zur einer Mittelebene des Photovoltaik-Moduls eine Gesamterstreckung zeigen, die höchstens das 5-fache, bevorzugt höchstens das 4.5-fache einer Mindestbreite der Aufnahme beträgt. Dies gilt insbesondere für Dicken des PV-Moduls von mehr als 5 mm**.** Liegt die Dicke des PV-Moduls hingegen unterhalb von 4 mm, kann die Gesamterstreckung höher ausfallen, sollte dann aber beispielsweise höchstens das 8-fache der Mindestbreite der Aufnahme betragen. Solche Ausgestaltungen resultieren in einer vergleichsweise schmalen lateralen Ausdehnung der Modulhalterung und damit in einer reduzierten Verschattung.

Erfindungsgemäß ist vorgesehen, dass die beiden Schenkel der Modulhalterung als Teil eines Hohl-Profils ausgestaltet sind. Bevorzugt kann dabei die gesamte Modulhalterung durch das Hohlprofil gebildet sein. Das Hohlprofil kann dabei bevorzugt, zumindest abschnittsweise, als Längsprofil mit konstantem Querschnitt ausgestaltet sein.

Erfindungsgemäß sind die beiden Schenkel über eine in sich geschlossene (insbesondere ringförmige) Hohlkammerwandung des Hohl-Profils miteinander mechanisch verbunden. Diese geschlossene Hohlkammerwandung des Hohlprofils bildet dabei eine Hohlkammer (in den Figuren mit 32c bezeichnet) aus. Durch diese erfindungsgemäße Ausgestaltung kann die mechanische Festigkeit der Modulhalterung gesteigert werden, ohne dass dies negative Auswirkungen auf die Verschattung hat: Denn bevorzugt kann vorgesehen sein, dass die besagte Hohlkammer, die durch eine geschlossene Hohlkammerwandung des Hohl-Profils begrenzt ist, in der Modulebene angeordnet ist. Mit anderen Worten verläuft dann diejenige Ebene, in welcher die aktive Fläche des PV-Moduls, welches von dem Hohlprofil/ der Modulhalterung gehalten wird, durch die besagte Hohlkammer.

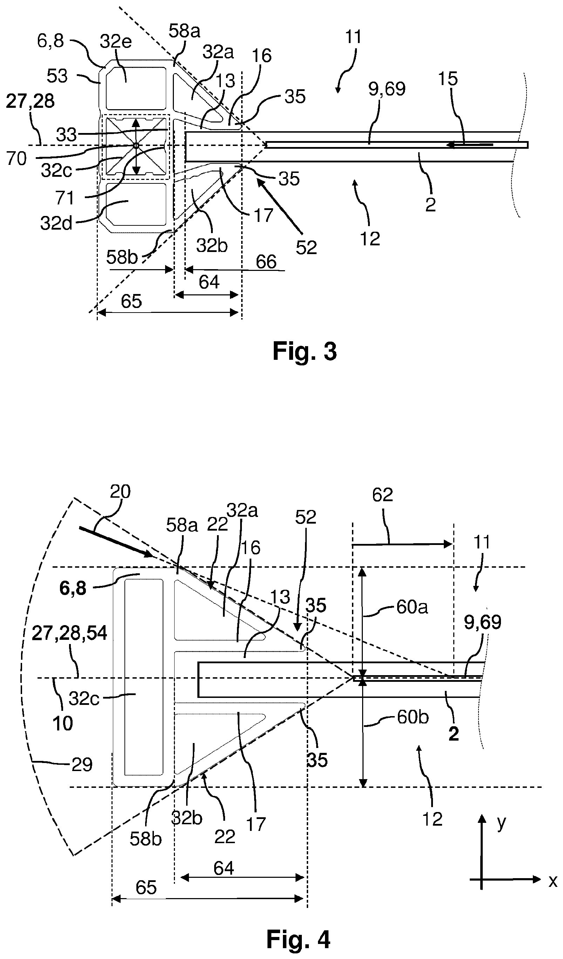

Erfindungsgemäß ist daher vorgesehen, dass ein geometrischer Schwerpunkt der Hohlkammer einen lateralen Abstand quer zur Modulebene zeigt, der weniger als 25% einer lateralen Ausdehnung der Hohlkammer quer zur Modulebene beträgt (jeweils bezogen auf einen Querschnitt durch die Hohlkammer, der senkrecht zur Modulebene verläuft - vgl. dazu etwa die Figur 3). Ganz besonders bevorzugt kann dieser Schwerpunkt wie bereits erwähnt in der Modulebene liegen.

Eine wie zuvor beschriebene Anordnung der Hohlkammer in der Modulebene ist auf den ersten Blick schlecht hinsichtlich der effektiven Modulfläche, denn so vergrößert sich die Bruttogröße des Moduls, während die Nettofläche der aktiven Fläche gleich bleibt. Die Erfindung hat jedoch erkannt, dass es hier einen gewissen trade-off gibt zwischen mechanischer Stabilität auf der einen Seite und Abschattung der aktiven Fläche auf der anderen Seite. Die erfindungsgemäße Anordnung ermöglicht somit einerseits eine geringe Verschattung und andererseits eine ausreichende Stabilität der Modulhalterung, insbesondere bei Ausgestaltung des Sets in Form eines gerahmten PV-Moduls.

Eine besonders bevorzugte Ausgestaltung kann demnach vorsehen, dass die geschlossene Hohlkammerwandung eine Hohlkammer ausbildet, die in der Einsetzrichtung auf die Aufnahme folgt (also hinter dieser angeordnet ist, vorzugsweise in der Modulebene).

Ergänzend kann zur Vergrößerung der mechanischen Stabilität der Modulhalterung vorgesehen sein, dass das Hohlprofil im Bereich der Aufnahme eine Wandstärkenverdickung aufweist, die in der Modulebene liegt. Dadurch kann effektiv verhindert werden, dass in diesem Bereich ein potentiell mechanisch schwacher Knickpunkt entsteht, insbesondere wenn dreiecksförmige Hohlkammern zur Definition der beiden Schenkel in dem Hohlprofil ausgebildet werden/sind.

Die Modulhalterung kann ferner an ihrem modulseitigen Ende eine Querschnittsbreite quer zur Einsetzrichtung aufweisen, die höchstens der Summe der Mindestbreite der Aufnahme und zweimal einer Materialstärke des Hohl-Profils entspricht. In diesem Fall schließt sich somit an der modulseitigen Spitze der Modulhalterung vorder- und rückseitig an die Aufnahme lediglich eine Materialstärke des Hohl-Profils an. Eine solche Ausgestaltung sorgt für eine hervorragende mechanische Festigkeit, insbesondere in Richtung der jeweiligen Längs-oder Querseite des Moduls, die durch die Modulhalterung stabilisiert werden soll, bei gleichzeitig geringem Materialeinsatz und damit Kosten. Gleichzeitig wird durch den spitz zulaufenden Querschnitt am modulseitigen Ende der Modulhalterung ebenfalls die Verschattungswirkung minimiert.

Um die Festigkeit der Modulhalterung zu steigern, sieht eine besonders bevorzugte Ausgestaltung vor, dass der vordere und der hintere Schenkel, welche die Aufnahme begrenzen, jeweils mittels einer in sich geschlossenen Hohlkammerwandung (die vorzugsweise eine dreieckigen Querschnitt aufweisen kann) des Hohl-Profils ausgebildet sind. Somit kann jeder der beiden Schenkel eine jeweilige Hohlkammer ausbilden, die, bezogen auf die Einsetzrichtung, links und rechts der Aufnahme angeordnet sind. Bezogen auf die aktive Fläche liegen diese beiden Hohlkammern somit vor beziehungsweise hinter der Aufnahme beziehungsweise dem in die Aufnahme eingeschobenen PV-Modul.

Eine erfindungsgemäße Modulhalterung kann beispielsweise als ein (insbesondere einzelnes) Modulhalteelement ausgestaltet sein. Somit kann die Modulhalterung lediglich einen Teilabschnitt des umlaufenden äußeren Rand des zugehörigen PV-Moduls umgreifen oder zumindest einseitig abstützen. Hierbei ist es bevorzugt, wenn das Set mehrere solcher Modulhalteelemente bzw. Modulhalterungen umfasst, die jeweils Teilabschnitte des äußeren Rands, also insbesondere Teilabschnitte einer jeweiligen Längsseite oder Querseite des PV-Moduls, umgreifen oder zumindest einseitig abstützen.

Bei einer hierzu alternativen Ausgestaltung ist vorgesehen, dass das Set wenigstens vier Modulhalterungen umfasst, die zusammen einen um das PV-Modul umlaufenden, vorzugsweise rechteckigen, Modulrahmen ausbilden. Der Modulrahmen kann somit in sich geschlossen sein. Zu diesem Zweck können die Modulhalterungen an mehreren Fügestellen zu dem Modulrahmen zusammengefügt sein. Das Zusammenfügen mehrerer Modulhalterungen zu dem Modulrahmen kann mittels üblicher Eckverbinder realisiert sein. Diese Eckverbinder können in das jeweilige Profil von zwei Modulhalterungen eingesetzt sein, um diese beiden Modulhalterungen miteinander zu verbinden.

Möglich sind auch Ausgestaltungen des Modulrahmens, bei denen eine jeweilige Beabstandung zwischen Spitzen der Schenkel der jeweiligen Modulhalterung (die an der Quer- oder Längsseite das PV-Modul stabilisiert) und dem äußeren Rand der aktiven Fläche bezogen auf die Vorderseite und/oder bezogen auf die Rückseite unterschiedlich groß gewählt sind. Gerade bei einer annähernd symmetrischen Ausgestaltung des Querschnitts des Modulrahmens kann die jeweilige Beabstandung aber auch gleich groß sein. Eine bevorzugte Ausgestaltung sieht jedoch vor, dass eine Beabstandung einer Spitze einer oberen Modulhalterung, die an einer Oberseite des PV-Moduls angeordnet ist, größer gewählt ist als eine Beabstandung einer Spitze einer unteren Modulhalterung, die an einer Unterseite des PV-Moduls angeordnet ist, und zwar jeweils bezogen auf die aktive Fläche des PV-Moduls. Derartige Ausgestaltungen können die Flächennutzung optimieren, wodurch, bezogen auf eine gewissen Länge oder Höhe der Tragkonstruktion einer PV-Anlage, in welcher das Set mehrfach verbaut ist, insgesamt mehr aktive Fläche angeordnet werden kann.

Ein solcher Modulrahmen kann beispielsweise vorder- und rückseitig bezogen auf eine parallel zur aktiven Fläche des PV-Moduls verlaufenden Mittelebene des Modulrahmens eine Querschnittsform Form eines Schrägschnitt-Passepartouts, ähnlich wie bei einem Bilderrahmen, aufweisen. Durch die Schrägflächen werden dadurch die erwünschten großen Einfallswinkel ermöglicht.

An dieser Stelle ist wichtig festzuhalten, dass nicht alle der vier Modulhalterungen erfindungsgemäß mit konvexem Profil ausgestaltet sein müssen. Beispielsweise kann eine größere Beabstandung zur aktiven Fläche an einer unteren Modulhalterung verzichtbar sein, weil in der finalen Montageposition die Sonnenstrahlen stets von oben, jedoch nie von unten auf die vertikal ausgerichtete aktive Fläche des PV-Moduls einfallen (daher kann die erwähnte untere Modulhalterung bis an die aktive Fläche heranreichen). Aus demselben Grund kann sogar auf die Ausbildung einer Abschrägung an und/oder auf eine konvexe Form der unteren Modulhalterung verzichtet werden. Aus Gründen der effizienteren Fertigung sind jedoch Ausgestaltungen bevorzugt, bei denen zumindest die beiden vertikal verlaufenden linken und rechten Modulhalterungen des Modulrahmens mit zueinander gleichem Querschnittsprofil und auch die oberen und unteren Modulhalterungen des Modulrahmens ebenfalls mit zueinander gleichem Querschnittsprofil ausgebildet sind.

Besonders bevorzugt ist eine Ausgestaltung, bei der alle vier Modulhalterungen des Modulrahmens ein identisches Querschnittsprofil aufweisen. Denn dies vereinfacht das Zusammenfügen an den Fügestellen.

Es kann auch vorgesehen sein, dass der Modulrahmen entlang einer Längsseite des Photovoltaik-Moduls einen ersten Querschnitt aufweist und entlang einer Querseite des PV-Moduls einen zweiten Querschnitt. Hierbei kann der zweite Querschnitt, welcher die Querseite des PV-Moduls stabilisiert, eine höhere mechanische Steifigkeit bieten und/oder größer, insbesondere breiter, ausgestaltet sein als der erste Querschnitt, welcher die Längsseite des PV-Moduls stabilisiert. Hierdurch kann ein minimaler Materialeinsatz bei ausreichender Stabilisierung des PV-Moduls erreicht werden.

Zum Halten des Rands des PV-Moduls in der Aufnahme sind vielfältige Ausgestaltungen möglich. So kann der Rand beispielsweise klemmend gehalten und/oder eingeklebt sein, was insbesondere mithilfe eines Klebebands erfolgen kann. Gemäß einer bevorzugten Ausgestaltung ist der Rand des PV-Moduls in der Aufnahme mittels einer Dichtungsmasse abdichtend eingeklebt. Als Dichtungsmasse, bzw. abdichtende Klebemasse, eignen sich insbesondere flüssige Silikonkleber. Diese können in der Aufnahme aushärten und so verbliebene Spalte zwischen dem PV-Modul und der Modulhalterung ausfüllen. Bei Benutzung von Klebebändern bietet es sich an, die Aufnahme V-förmig auszugestalten, sodass dann eine Breite der Aufnahme in der Einsetzrichtung abnimmt.

Generell ist es für die Verschattung vorteilhaft, wenn eine Spitze des vorderen Schenkels und/oder des hinteren Schenkels das modulseitige Ende der Modulhalterung ausbildet bzw. definiert. Dieses Merkmal unterscheidet erfindungsgemäße Ausgestaltungen von vorbekannten Modulrahmen, bei denen ein lateral zur Aufnahme angeordneter Stabilisierungsschenkel ausgebildet ist, der modulseitig noch über die Aufnahme hervorsteht.

Zur Lösung der genannten Aufgabe sind ferner erfindungsgemäß die Merkmale des Anspruchs 12 vorgesehen, der auf eine PV-Anlage gerichtet ist. Insbesondere wird somit erfindungsgemäß zur Lösung der Aufgabe bei einer PV-Anlage der eingangs beschriebenen Art vorgeschlagen, dass die rahmenlosen PV-Module jeweils mittels wenigstens einer jeweiligen Modulhalterung, vorzugsweise mittels wenigstens zwei Modulhalterungen, an der Tragkonstruktion befestigt sind. Ferner ist vorgesehen, dass das jeweilige bifaziale PV-Modul und die zugehörige wenigstens eine Modulhalterung jeweils ein Set bilden, wie es zuvor beschrieben wurde oder gemäß einem der Ansprüche, die auf ein erfindungsgemäßes Set gerichtet sind.

Jeweils zwei Pfosten und zwei Riegel der Tragkonstruktion können hierbei ein im Wesentlichen rechteckiges Montagefeld definieren, in dem wenigstens eines der PV-Module angeordnet ist. Die Pfosten aber auch die Riegel können bevorzugt in Form von metallischen Längsprofilen ausgestaltet sein. Diese Längsprofile können sehr einfach durch kalte Umformung hergestellt sein, also als sogenannte Kalt-Profile. Die Modulhalterung kann hingegen insbesondere mittels Aluminium-Strangguss hergestellt sein.

Die Pfosten der Tragkonstruktion können beispielsweise in einer Reihe aufgestellt sein, um einen Solarzaun zu realisieren. Um eine großflächige PV-Anlage zu realisieren, können die Pfosten auch in voneinander beabstandeten Reihen aufgestellt werden. Hierbei können dann die Pfosten einer Reihe im Wesentlichen eine Ebene bilden.

Zwischen dem Erdreich und einem untersten der Riegel der Tragkonstruktion kann ein Freiraum freigehalten sein, um so eine landwirtschaftliche Bewirtschaftung dieses Freiraums zwischen den Pfosten zu ermöglichen. Ebenso kann ein Freiraum, der zwischen den erwähnten Reihen an Pfosten ausgebildet ist, landwirtschaftlich genutzt werden.

Gängige PV-Module weisen typischerweise eine rechteckige Grundform auf, beispielsweise mit einem Aspektverhältnis von näherungsweise 2:1. Dabei können solche PV-Module in einer erfindungsgemäßen PV-Anlage sowohl im Querformat (landscape) als auch im Hochformat (portrait) an der Tragkonstruktion montiert sein.

Gemäß einer möglichen Ausgestaltung können die Modulhalterungen in eine jeweilige Aufnahme, die von einem der Riegel oder Pfosten ausgebildet wird, vorzugsweise drehfest, eingesetzt sein.

Es wird also insbesondere vorgeschlagen, ein wie zuvor beschriebenes oder hierin beanspruchtes Set aus einer Modulhalterung und einem zugehörigen bifazialen PV-Modul dazu zu verwenden, an einer Tragkonstruktion befestigt zu werden, um so eine leistungsfähige und äußerst (wind-)stabile PV-Anlage auszubilden. Der Aufbau der PV-Anlage kann dabei derart erfolgen, dass zunächst die Tragkonstruktion, also die Pfosten und die zugehörigen Riegel, montiert werden, wodurch zwischen den Pfosten im wesentlichen rechteckige Montagefelder ausgebildet werden. Anschließend kann ein oder mehrere erfindungsgemäße Sets in dem Montagefeld, also an der Tragkonstruktion, befestigt werden, um so die PV-Anlage zu komplettieren.

Das jeweilige Set, welches durch ein PV-Modul und die zugehörige wenigstens eine Modulhalterung gebildet ist, kann beispielsweise eine Modulhalterung umfassen, die an einem der Pfosten befestigt ist, was vorzugsweise mittels separater Befestigungselemente realisiert sein kann. Es kann ferner ergänzend oder aber alternativ vorgesehen sein, dass das jeweilige Set eine Modulhalterung umfasst, die unterhalb eines der Riegel, vorzugsweise mittels separater Befestigungselemente, befestigt ist. Diese an den Pfosten und/oder Riegeln befestigen Modulhalterungen sind dann also mit erfindungsgemäßen Merkmalen (wie zuvor beschrieben) ausgestaltet.

Die mechanische Verbindung des jeweiligen PV-Moduls an die Riegel und/oder Pfosten der Tragkonstruktion kann somit insbesondere ausschließlich über (separate) Modulhalterungen realisiert sein. Hierbei müssen jedoch nicht alle dieser Modulhalterungen erfindungsgemäß mit konvexem Profil ausgestaltet sein; dies gilt insbesondere für Modulhalterungen, die eine horizontal verlaufende Unterseite des PV-Moduls umgreifen, da dort keine Verschattung der aktiven Fläche auftritt, wenn Sonnenstrahlen von oben einfallen. Daher müssen diese unteren Modulhalterung beispielsweise nicht zwingend Abschrägungen aufweisen.

Eine erfindungsgemäße PV-Anlage kann somit eine Tragkonstruktion umfassen mit Riegeln, an deren Unterseite eine Modulhalterung eines der zuvor erwähnten Sets, vorzugweise mittels separater Befestigungselemente, aufgehängt ist. Ferner kann die Tragkonstruktion Riegel aufweisen, an deren Oberseite eine Modulhalterung eines der zuvor erwähnten Sets, vorzugweise mittels separater Befestigungselemente, befestigt ist. In beiden Fällen kann ein Querschnitt des jeweiligen Riegels, der quer zu einer Längsrichtung des Riegels verläuft, so gewählt sein, dass ein jeweiliger maximaler verschattungsfreier Einfallswinkel, unter dem ein jeweiliger einfallender Sonnenstrahl die aktive Fläche des PV-Moduls von der Vorderseite oder von der Rückseite her erreichen kann, durch eine Außenkontur der Modulhalterung festgelegt ist (und nicht etwa durch eine Außenkontur des verwendeten Riegels). Mit anderen Worten wird bei einer solchen Ausgestaltung der jeweilige Einfallswinkel durch den Riegel höchstens so stark eingeschränkt als bereits durch die Modulhalterung. Um dies zu ermöglichen, kann der Riegel an seiner Unterseite, vorder- und rückseitig und bezogen auf das Photovoltaik-Modul, eine jeweilige Abschrägung aufweisen beziehungsweise ausbilden.

In der finalen Montageposition kann der Querschnitt des Riegels somit insbesondere innerhalb eines in der Querschnittsebene aufgespannten Verschattungswinkels liegen, der von einem äußeren Rand der aktiven Fläche des PV-Moduls des Sets ausgeht und der höchstens 100°, vorzugsweise höchstens 90°, beträgt. Dadurch kann wirksam vermieden werden, dass der Riegel eine Verschattung der unter dem Riegel befindlichen aktiven Fläche des PV-Moduls bewirkt.

Eine bevorzugte Ausgestaltung der PV-Anlage sieht vor, dass diejenigen Riegel, an deren Unterseite (oder Oberseite) eines der Sets montiert ist, mittels eines nach oben (oder nach unten) halboffenen Längsprofils ausgestaltet sind. Ein solches halboffenes Längsprofil kann vorzugweise in Form eines C-Profils ausgestaltet sein.

Ferner kann vorgesehen sein, dass einzelne der zuvor erwähnten Befestigungselemente in, vorzugweise schlitzförmigen, Durchstecköffnungen an der Unterseite (oder Oberseite) von Riegeln eingesteckt sind. Dadurch kann eine unter (oder über) dem Riegel angeordnete Modulhalterung eines der Sets an dem Riegel befestigt werden/sein.

Eine weitere Ausgestaltung sieht vor, dass die erwähnten Befestigungselemente vorder- und rückseitig jeweilige Laschen ausbilden, an welchen die Modulhalterung des zugehörigen Sets montiert, also vorzugsweise verklemmt oder verschraubt, ist.

Die Tragkonstruktion kann dabei beispielsweise auch Riegel umfassen, die mittels eines nach unten halboffenen Längsprofils ausgestaltet sind (Dies können selbstverständlich dieselben Profile sein, nur in anderer Orientierung verwendet). Oberhalb solcher Riegel können dann in analoger Weise Modulhalterungen montiert sein.

Die Befestigungselemente können darüber hinaus (bezogen auf die Modulebene) vorder- und rückseitige Anlageschenkel ausbilden, die in der Montageposition innenseitig an dem Riegel abgestützt sind. Dadurch können Haltekräfte in den Riegel abgeleitet werden. Beispielsweise können solche Anlageschenkel als aufgebogene Laschen ausgestaltet sein, die flächig an einer Innenseite des erwähnten halboffenen Längsprofils anliegen. Die Befestigungselemente können ihrerseits mit dem Riegel verschraubt sein, wobei diese Verschraubung im Bereich der Anlageschenkel ausgebildet sein kann. Dadurch kann eine Kontaktfläche des jeweiligen Anlageschenkels mittels der Verschraubung auf die Innenseite des Riegels angepresst sein.

Die Erfindung wird nun anhand von Ausführungsbeispielen näher beschrieben, ist aber nicht auf diese Ausführungsbeispiele beschränkt. Weitere Ausbildungen der Erfindung können aus der nachfolgenden Beschreibung eines bevorzugten Ausführungsbeispiels in Verbindung mit der allgemeinen Beschreibung, den Ansprüchen sowie den Zeichnungen gewonnen werden. Die Zeichnungen sind dabei schematisch zu verstehen und nicht zwingend, sondern nur näherungsweise maßstabsgetreu.

Bei der folgenden Beschreibung verschiedener Ausführungsformen der Erfindung erhalten in ihrer Funktion übereinstimmende Elemente auch bei abweichender Gestaltung oder Formgebung übereinstimmende Bezugszahlen.

Es zeigt:
- Figur 1: eine vorbekannte Modulhalterung in Form eines Modulrahmens mit rückseitigem Stabilisierungsschenkel,
- Figur 2: eine weitere vorbekannte Modulhalterung in Form eines Modulrahmens, der etwas schmaler als derjenige der Figur 1 gehalten ist,
- Figur 3: einen Querschnitt einer ersten erfindungsgemäß ausgestalteten Modulhalterung mit eingesetztem zugehörigem PV-Modul,
- Figur 4: einen Querschnitt einer zweiten erfindungsgemäß ausgestalteten Modulhalterung mit eingesetztem zugehörigem PV-Modul,
- Figur 5: dieselbe Modulhalterung wie in Figur 4, jedoch mit einem andersartigen PV-Modul,
- Figur 6: Details des Querschnitts eines Hohlprofils, welches die Modulhalterung der Figuren 4 und 5 ausbildet,
- Figur 7: eine Seitenansicht (in y-Richtung) auf eine erste erfindungsgemäße PV-Anlage,
- Figur 8: eine Seitenansicht (in y-Richtung) auf eine zweite erfindungsgemäße PV-Anlage,
- Figur 9: eine Seitenansicht (in y-Richtung) auf eine dritte erfindungsgemäße PV-Anlage,
- Figur 10: einen Querschnitt eines (schematisch dargestellten) Riegels einer PV-Anlage, an dessen Unterseite eine Modulhalterung montiert ist,
- Figur 11: ein erfindungsgemäß ausgestaltetes Set aus einer Modulhalterung und einem zugehörigen PV-Modul, wobei hier die aktive Fläche 9, die eine Modul-Ebene vorgibt, in einer Mittelebene des PV-Moduls liegt,
- Figur 12: den Einfluss des Versatzes zwischen dem modulseitigen Ende einer erfindungsgemäßen Modulhalterung und der aktiven Fläche eines darin eingesetzten PV-Moduls,
- Figur 13: ein erfindungsgemäßes Set, wobei die aktive Fläche des PV-Moduls, bezogen auf eine Symmetrieebene der zugehörigen Modulhalterung, zur Rückseite hin versetzt ist,
- Figur 14: ein erfindungsgemäßes Set, wobei die aktive Fläche des PV-Moduls, bezogen auf eine Mittelebene der zugehörigen asymmetrisch ausgestalteten Modulhalterung, zur Vorderseite hin versetzt ist,
- Figur 15: ein erfindungsgemäßes Set, wobei die aktive Fläche des PV-Moduls in einer Mittelebene des PV-Moduls angeordnet ist und die Modulhalterung asymmetrisch ausgestaltet ist,
- Figur 16: einen Querschnitt eines (schematisch dargestellten) Riegels einer PV-Anlage, an dessen Unterseite ein erfindungsgemäßes Set montiert ist,
- Figur 17: eine Ansicht von oben auf einen Riegel einer erfindungsgemäßen PV-Anlage und schließlich
- Figur 18: eine Ansicht schräg von der Seite auf den Riegel aus Figur 17 mit darunter montiertem PV-Modul samt zugehörigem Modulrahmen.

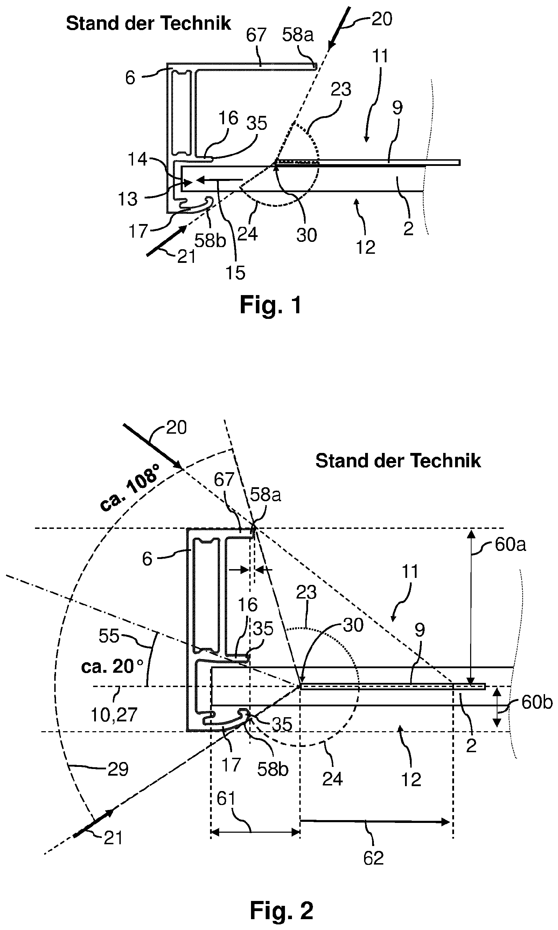

Die Figur 1 zeigt eine aus dem Stand der Technik vorbekannte Modulhalterung 6 in Form eines Modulrahmens mit rückseitigem Stabilisierungsschenkel 67. Die Modulhalterung 6 bietet eine Aufnahme 13, in welche ein äußerer Rand 14 eines zugehörigen Photovoltaik-Moduls 2 in Form eines Glas-Laminats in einer Einsetzrichtung 15 eingesetzt und so in Position gehalten ist. Das PV-Modul 2 weist rückseitig eine aktive Fläche 9 auf, die sowohl von der Vorderseite 12 als auch von der Rückseite 11 des PV-Moduls 2 her Sonnenlicht empfangen kann, um das Sonnenlicht in elektrischen Strom umzuwandeln.

Wie in Figur 1 zu erkennen ist, ist die Aufnahme 13 vorderseitig durch einen vorderen Schenkel 17 und rückseitig durch einen hinteren Schenkel 16 der Modulhalterung 6 begrenzt. Zwar kann vorderseitig der auf das PV-Modul 2 einfallende Sonnenstrahl 21 unter einem vergleichsweise großen maximalen verschattungsfreien Einfallswinkel 24 den äußeren Rand 30 der aktiven Fläche 9 erreichen. Rückseitig jedoch steht der besagte Stabilisierungsschenkel 67 sehr weit über den vorderen und hinteren Schenkel 17, 16 hervor, sodass der äußerste Punkt 58a des Stabilisierungsschenkels 67, der für die rückseitige Verschattung der aktiven Fläche 9 relevant ist, entgegen der Einsetzrichtung 15 über die Aufnahme 13 hervorsteht. Dies ist insofern nachteilig, als der Sonnenstrahl 20, der auf die Rückseite 11 des PV-Moduls 2 einfällt, nur noch unter einem vergleichsweise geringen Einfallswinkel 23 den äußeren Rand 30 der aktiven Fläche 9 erreichen kann.

Die Figur 2 zeigt ein weiteres Beispiel einer vorbekannten Modulhalterung 6 mit eingesetztem PV-Modul 2. Im Vergleich zu dem Beispiel der Figur 1 befindet sich nun die aktive Fläche 9 innerhalb des PV-Moduls 2. Zudem ist der besagte Stabilisierungsschenkel 67 im Vergleich zu der Ausgestaltung gemäß Figur 1 wesentlich kürzer ausgestaltet, was zwar in einer geringeren Stabilität der Modulhalterung 6 resultiert, aber den von der Modulhalterung 6 aufgespannten Verschattungswinkels 29 (bezogen auf den äußeren Rand 30 der aktiven Fläche 9) bereits erheblich reduziert (Vgl. dazu Figur 1).

Allerdings ist auch die Ausgestaltung der Modulhalterung 6 gemäß Figur 2 für die Verwendung mit einem bifazialen PV-Modul 2 suboptimal, da die Modulhalterung 6 rückseitig einen erheblichen lateralen Abstand 60a zur Ebene 10 der aktiven Fläche 9 des PV-Moduls 2 aufweist, die oftmals auch als Modulebene bezeichnet wird. Fällt daher ein Sonnenstrahl 20 rückseitig auf das PV-Modul 2 unter einem Winkel ein, der - wie in Figur 2 gezeigt - den maximalen verschattungsfreien Einfallswinkel 23 überschreitet, so schattet die Modulhalterung 6, genauer deren rückseitiger Stabilisierungsschenkel 67, insbesondere der gezeigte Außenpunkt 58a, die aktive Fläche 9 ab. Da der laterale Abstand 60a vergleichsweise groß ist, kommt es bereits bei geringen Überschreitungen des maximalen verschattungsfreien Einfallswinkels 23 zu einer erheblichen Verschattungslänge 62 (diese hängt linear ab von 60a). Bei einem solchen Sonneneinfall kann also unter Umständen der gesamte Randbereich der aktiven Fläche 9, der der Verschattungslänge 62 entspricht, kein Sonnenlicht mehr empfangen und daher nicht mehr zur Stromproduktion beitragen.

Die Figur 3 zeigt ein erstes Beispiel eines erfindungsgemäßen Sets aus einer Modulhalterung 6 und einem zugehörigen bifazialen PV-Modul 2. Auch hier bildet die Modulhalterung 6 wieder eine Aufnahme 13 aus, die vorderseitig durch einen vorderen Schenkel 17 und rückseitig durch einen hinteren Schenkel 16 begrenzt ist. Allerdings ist auf den ersten Blick zu erkennen, dass die modulseitigen Spitzen 35 der beiden Schenkel 16 und 17 das modulseitige Ende 52 der Modulhalterung 6 ausbilden. Die jeweiligen Außenpunkte 58a, 58b (des senkrecht zu der Ebene 10 der aktiven Fläche 9 verlaufenden Querschnitts der Modulhalterung 6), die jeweils vorder- bzw. rückseitig für die Verschattung der aktiven Fläche 9 durch die Modulhalterung 6 relevant sind, sind somit erkennbar in der Einsetzrichtung 15 und bezogen auf die beiden erwähnten Spitzen 35 der beiden Schenkel 16, 17 zurückversetzt. Der axiale Versatz dieser Außenpunkte 58a, 58b zur jeweiligen Spitze 35 beträgt dabei mehr als das 1.5-fache der Mindestbreite der Aufnahme 13. Entscheidend ist hierbei, dass die für die Verschattung relevanten Außenpunkte 58a, 58b so zurückversetzt sind, dass die aktive Fläche 9 verschattungsfrei bleibt. Hierbei könnte das Profil 8 beispielsweise aber auch an der Oberseite offen ausgestaltet sein, das heißt die Hohlkammer 32e muss nicht zwingend im Querschnitt geschlossen ausgestaltet sein; dies ist aber vorteilhaft für eine höhere mechanische Stabilität des Hohlprofils 8/der Modulhalterung 6.

Auffallend an dem in Figur 3 gezeigten Hohlprofil 8 (wie auch bei dem der Figur 4) ist ferner die spezifische Anordnung der Hohlkammer 32c, die bei dem gezeigten Beispiel durch eine im Querschnitt geschlossene Wandung des Hohlprofils 8 begrenzt ist. Diese Hohlkammer 32c, vorzugsweise wie gezeigt ihr geometrischer Schwerpunkt, liegt in der Modulebene 69, also in derjenigen Ebene, in welcher die aktiven Flächen 9 der PV-Module 2 liegen. Zudem erstreckt sich die Hohlkammer 32c sowohl jenseits der Vorderseite 12 des PV-Moduls 2 als auch jenseits seiner Rückseite 11. Erkennbar liegt in Figur 3 sogar der geometrische Schwerpunkt 70 der Hohlkammer 32c in der Modulebene 69. Durch solche Anordnungen und Ausgestaltungen der Hohlkammer 32c wird es möglich, die mechanische Stabilität des Hohlprofils 8 zu steigern, ohne dabei Einbußen in Bezug auf die Verschattungsfreiheit hinnehmen zu müssen, wie dies oftmals bei vorbekannten Halterungen der Fall war, wo eine solche Kammer vor oder hinter der Modulebene angeordnet wurde. Im gezeigten Beispiel liegt der Schwerpunkt 70 somit mittig in Bezug auf die laterale Ausdehnung der Hohlkammer 32c quer zur Modulebene 69 (vgl. den Doppelpfeil).

In Figur 3 erkennt man ferner, dass zur weiteren Vergrößerung der mechanischen Stabilität des Modulhalters 6, das Hohlprofil 8 im Bereich der Aufnahme 13 eine Wandstärkenverdickung 71 aufweist. Diese Wandstärkenverdickung 71 liegt in der Modulebene 69 und ist an einer Wandung des Hohlprofils 8 ausgebildet, welche die beiden Schenkel 16 und 17 beziehungsweise die beiden Hohlkammern 32a und 32b verbindet. Zudem begrenzt diese Wandung die Aufnahme 13. Auch so kann trotz geringer Verschattungswinkel eine hohe mechanische Festigkeit der Modulhalterung 6 beibehalten werden.

Die Figur 4 zeigt ein weiteres Beispiel eines erfindungsgemäßen Sets aus einer Modulhalterung 6 und eines zugehörigen PV-Moduls. Auch bei diesem Beispiel ist der axiale Versatz der beiden Außenpunkte 58a und 58b im Vergleich zu jeweiligen Spitze 35 des zugehörigen Schenkels 16, 17 klar zu erkennen. Darüber hinaus erkennt man bei beiden Beispielen der Figuren 3 und 4, dass die jeweilige Modulhalterung 6 in Bezug auf eine Mittelebene 27 des PV-Moduls 2 jeweils achsensymmetrisch ausgestaltet ist, die somit die Symmetrieebene 28 der jeweiligen Modulhalterung 6 bildet. Aufgrund dieser Achsensymmetrie können - bei vergleichbarer mechanischer Festigkeit - die jeweiligen lateralen Abstände 60a und 60b zwischen der Modulebene 10 und dem äußersten Rand der Modulhalterung 6, wie in Figur 3 und Figur 4 zu sehen, jeweils wesentlich kleiner ausgestaltet werden als die Dimension 60a in dem Beispiel der Figur 2. Entsprechend erkennt man auch bereits in Figur 4, dass die Verschattungslänge 62 entsprechend kleiner ausfällt bei Überschreiten des maximalen vorder- oder rückseitigen verschattungsfreien Einfallswinkels 23, 24.

Im Vergleich zu dem vorbekannten Beispiel der Figur 1 ist bei den erfindungsgemäßen Ausgestaltungen der Figuren 3 und 4 zudem auffallend, dass sowohl vorder-als auch rückseitig große maximale verschattungsfreie Einfallswinkel 23, 24 von jeweils mindestens 135° ermöglicht sind.

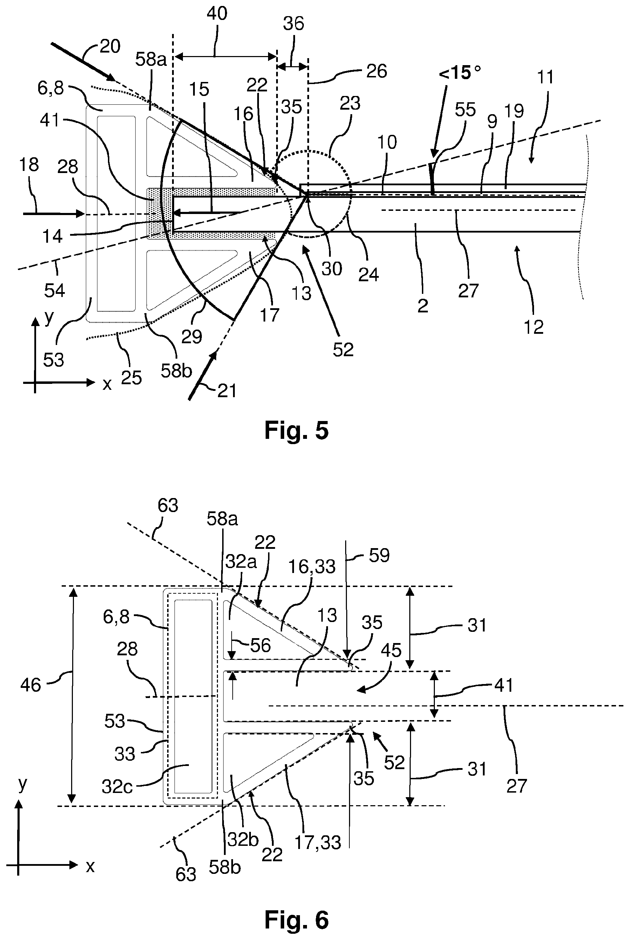

Die Figur 5 erläutert das erfindungsgemäße Konzept nochmals anhand derselben Modulhalterung 6, die bereits in Figur 4 gezeigt wurde und deren geometrische Details in der Figur 6 illustriert sind. Allerdings ist in Figur 5 der Fall gezeigt, dass ein PV-Modul 2 eingesetzt ist, bei welchem die aktive Fläche 9 in Bezug auf eine Mittelebene 27 des PV-Moduls 2 lateral versetzt ist. Obwohl das PV-Modul 2 mittig in die Aufnahme 13 der Modulhalterung 6 eingesetzt ist und obwohl die Modulhalterung 6 weiterhin achsensymmetrisch zu ihrer Symmetrieebene 28 ausgestaltet ist, ergibt sich somit auf der Rückseite 11 ein maximaler verschattungsfreier Einfallswinkel 23, der um einige Grad größer ausfällt als der zugehörige maximale verschattungsfreie Einfallswinkel 24 auf der Vorderseite 12, wie man in Figur 5 sieht.

Auch in der Figur 5 kann man somit einen Verschattungswinkel 29 identifizieren, der von dem äußeren Rand 30 der aktiven Fläche 9 des PV-Moduls 2 ausgeht und in der Querschnittsebene (xy-Ebene in Figur 5) der Modulhalterung 6 verläuft, die ihrerseits senkrecht zu der Ebene 10 (xz-Ebene in Figur 5) der aktiven Fläche 9 steht. Wie man in Figur 5 erkennt, liegt dabei eine Außenkontur 22 der Modulhalterung 6 innerhalb dieses Verschattungswinkels 29. Auch das modulseitige Ende 52 liegt dabei innerhalb des Verschattungswinkels 29. Ferner ist zu erkennen, dass die Winkelhalbierende 54 des Verschattungswinkels 29 mit der Ebene 10 der aktiven Fläche 9 betragsmäßig einen Verkippungswinkel 55 einschließt, der weniger als 15° beträgt. Aufgrund dieser Ausgestaltung des Sets aus Modulhalterung 6 und eingesetztem PV-Modul 2 werden die verschattungsfreien Winkelbereiche einigermaßen gleichmäßig zwischen der Vorderseite 12 und der Rückseite 11 des PV-Moduls 2 aufgeteilt. Da zudem der Verschattungswinkel 29 weniger als 90° beträgt, ist sichergestellt, dass in dem gezeigten Fall der Figur 5 der maximale verschattungsfreie vorderseitige Einfallswinkel 24 als auch der maximale verschattungsfreie rückseitige Einfallswinkel 23 jeweils wenigstens 120° betragen.

Damit solche hohen Werte für die verschattungsfreien maximalen Einfallswinkel 23, 24 erreicht werden können, ist entscheidend, dass die in Figur 5 als Punktlinie illustrierte Einhüllende 25 der Modulhalterung 6, die also die Außenkontur 22 einhüllt, in Richtung der Einsetzrichtung 15 gesehen, eine konvexe Form zeigt. Denn wie in Figur 5 zu sehen und insbesondere in Figur 6 nochmals genauer illustriert ist, bleibt die jeweilige vorder- und rückseitige Außenkontur 22 des xy-Querschnitts der Modulhalterung 6, die insbesondere von den beiden Schenkeln 16 und 17 ausgebildet wird, innerhalb der illustrierten Abschrägung 63, die jeweils auf die modulseitige Einführöffnung 45 der Aufnahme 13 zuläuft. Bei dem im Figur 6 gezeigten Beispiel bilden die beiden Abschrägungen 63 jeweils einen Winkel zur aktiven Fläche 9 von mehr als 145° aus. Selbstverständlich wäre es hierbei für die Verschattung unkritisch, wenn die Außenkontur 22 an einigen Punkten von der Abschrägung 63 nach innen (also in Richtung auf die Ebene 10 der aktiven Fläche 9) abweichen würde.

In Figur 5 ist auch zu erkennen, dass der Rand 14 des PV-Moduls 2 in der Aufnahme 13 mittels einer Dichtungsmasse 41 abdichtend eingeklebt ist.

Anhand der Figur 6 ist auch gut zu erkennen, dass die beiden Schenkel 16, 17 der Modulhalterung 6 jeweils eine laterale Erstreckung 31, quer zu einer Mittelebene 27 des (in Figur 6 nicht gezeigten) PV-Moduls 2 und jeweils gemessen von der Aufnahme 13 aus, zeigen, die mehr als 75 % der gezeigten Mindestbreite 41 der Aufnahme 13 ausmacht. Hierbei ist es zunächst unerheblich, ob die Mittelebene 27 des PV-Moduls 2 zu einer Mittelebene der Aufnahme 13 oder etwa zu der in Figur 6 gezeigten Symmetrieebene 28 der Modulhalterung 6 lateral versetzt ist. Vorteilhaft an einer solch großen jeweiligen vorder-als auch rückseitigen lateralen Erstreckung 31 ist, dass die Modulhalterung 6 eine erhebliche Steifigkeit bieten kann, aber gleichzeitig auch eine ausreichende Verschattungsfreiheit gewährleistet werden kann.

In den Figuren 3 bis 6 erkennt man zudem, dass die Modulhalterung 6 jeweils durch ein Hohlprofil 8 gebildet ist, welches seinerseits als Längsprofil mit konstantem Querschnitt ausgestaltet ist. Sowohl bei dem Design gemäß Figur 3 als auch bei dem gemäß den Figuren 4 bis 6 ist dabei eine in sich geschlossene Hohlkammerwandung 33 vorgesehen, die in den Figuren 3 und 6 jeweils mit einer gestrichelten Linie illustriert ist. Diese geschlossene Hohlkammerwandung 33 verbindet die beiden Schenkel 16, 17 mechanisch miteinander und sorgt so für eine hervorragende Stabilität der Modulhalterung 6.

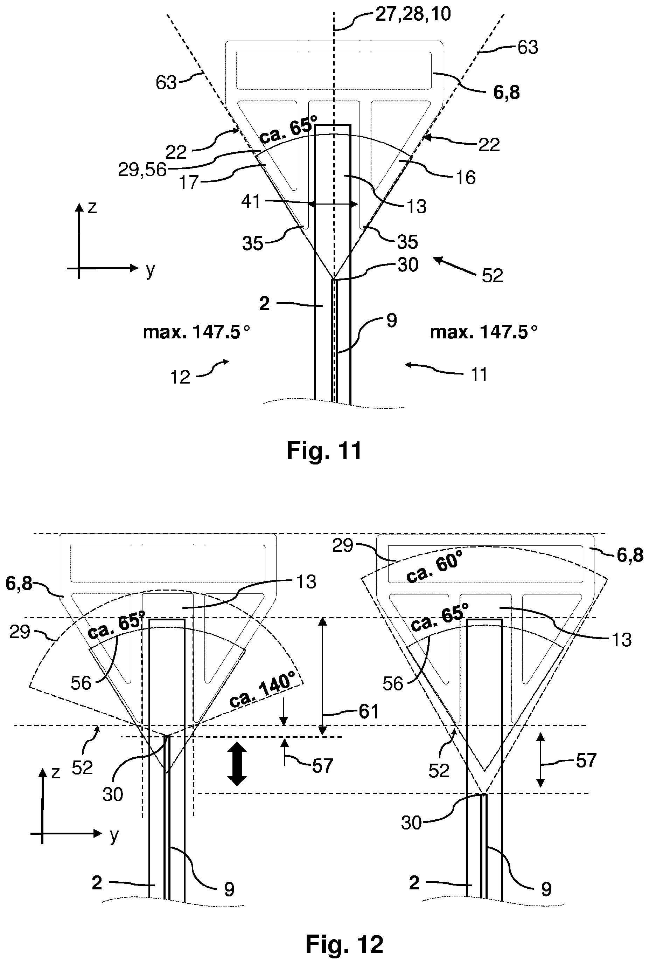

Gerade in Figur 6 erkennt man auch gut, dass sowohl der vordere als auch der hintere Schenkel 17, 16 ebenfalls jeweils mithilfe einer in sich geschlossenen Hohlkammerwandung 33 des Hohl-Profils 8 ausgebildet sind. Diese Hohlkammerwandungen 33 zeigen dabei einen dreiecksförmigen Querschnitt. Ebenso ist zu erkennen, dass in Figur 6 die Modulhalterung 6 an ihrem modulseitigen Ende 52 eine Querschnittsbreite 59 quer zu Einsetzrichtung 15 aufweist, die gerade der Summe der Mindestbreite 41 der Aufnahme 13 und zweimal der Materialstärke 56 des Hohl-Profils 8 entspricht. Eine solche Ausgestaltung ist besonders vorteilhaft, weil dadurch das modulseitige Ende 52 mit sehr geringem Versatz 57 (vgl. Figur 12) an den äußeren Rand 30 der aktiven Fläche 9 des PV-Moduls 2 heranrücken kann. Dadurch kann eine kompakte Ausgestaltung erhalten werden, die den Flächenbedarf für das Set, pro aktiver Fläche 9 des PV-Moduls 2, minimiert.

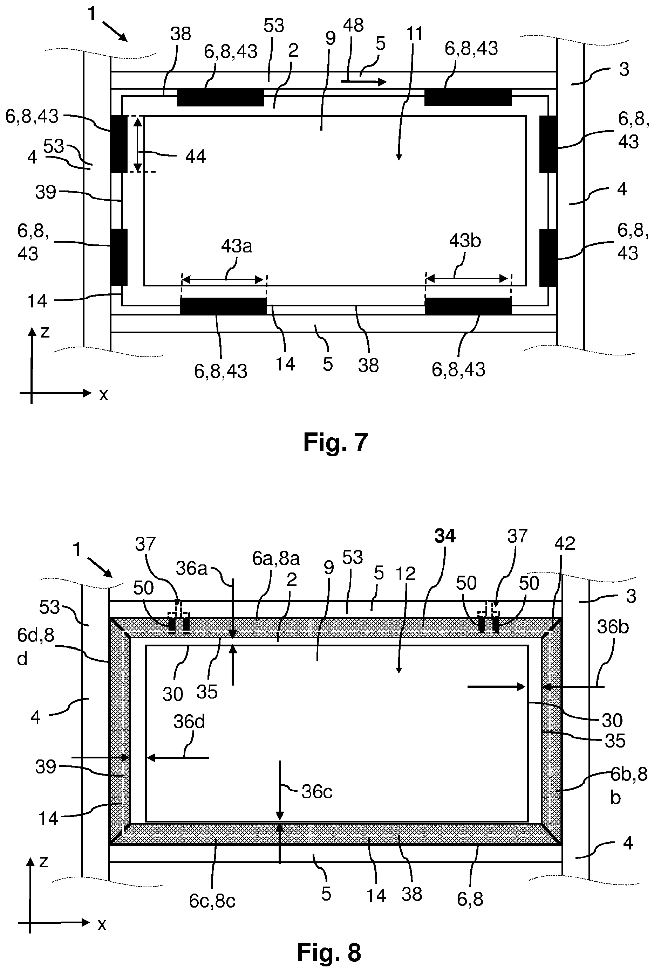

Die Figur 7 zeigt ein erstes Beispiel, wie mithilfe eines erfindungsgemäßen Sets eine Photovoltaik-Anlage 1 realisiert werden kann, bei welcher mehrere bifazial ausgestaltete PV-Module 2 aufrecht stehend an einer Tragkonstruktion 3 befestigt sind. Die Tragkonstruktion 3 umfasst mehrere vertikal in z-Richtung verlaufende Pfosten 4, die im Erdreich befestigt sind. An den Pfosten 4 sind horizontal verlaufende Riegel 5 befestigt, die somit jeweils zwei benachbarte Pfosten 4 miteinander verbinden. Wie man in Figur 7 gut erkennt, werden dadurch im wesentlichen rechteckige Montagefelder definiert, in denen wenigstens ein PV-Modul 2 angeordnet werden kann; im Beispiel der Figur 7 ist beispielsweise nur ein einziges PV-Modul 2 in "landscape"-Orientierung in dem Montagefeld aufgehängt, sodass die Längsseite 38 des PV-Moduls 2 horizontal entlang der Riegel 5 verläuft. In anderen Ausgestaltungen können aber auch mehrere PV-Module übereinander und/oder nebeneinander innerhalb des Montagefelds montiert sein.

Wie in Figur 7 zu erkennen ist, ist die Modulhalterung 6 des Sets in Form mehrerer Modulhalteelemente 43 ausgestaltet, wobei jedes dieser Modulhalteelemente 43 lediglich einen Teilabschnitt 44 des umlaufenden äußeren Rands 14 des PV-Moduls 2 umgreift. Die Modulhalteelemente 43 stellen dabei entweder eine mechanische Verbindung zwischen einem der Riegel 5 und dem PV-Modul 2 her oder zwischen dem PV-Modul 2 und einem der Pfosten 4. Gerade die oberen und unteren Modulhalteelemente 43, die an den horizontal verlaufenden Längsseiten 38 des PV-Moduls 2 das PV-Modul 2 halten, müssen eine erhebliche mechanische Festigkeit aufweisen, um die Windlasten, die auf die Fläche des PV-Moduls 2 einwirken, sicher in den jeweiligen Riegel 5 abzuleiten. Ergänzend hierzu kann zum Beispiel auch eine direkte mechanische Verbindung zweier übereinander oder nebeneinander angeordneter PV-Module 2 über ein solches Modulhaltelement 43 realisiert sein; in diesem Fall bietet das entsprechende Modulhalteelement 43 somit zu beiden Seiten eine jeweilige Aufnahme13, in die der Rand 14 des jeweiligen PV-Moduls 2 eingesetzt ist.

Die Figur 8 zeigt eine weitere erfindungsgemäße PV-Anlage 1, wobei hier das Set wenigstens vier Modulhalterungen 6a, 6b, 6c, 6d umfasst, die zusammen einen rechteckigen Modulrahmen 34 ausbilden, welcher um das PV-Modul 2 umläuft. Hierbei sind die insgesamt vier Modulhalterungen 6 an mehreren Fügestellen 42 mittels Eckverbindern zu dem Modulrahmen 34 zusammengefügt.

Anders als bei dem Beispiel der Figur 7, ist in Figur 8 zu erkennen, dass dort die Beabstandung 36a der Spitze 35 der oberen Modulhalterung 6a, die an der Oberseite des PV-Moduls 2 angeordnet ist, größer gewählt ist, als die Beabstandung 36c der Spitze 35 der unteren Modulhalterung 6c, die an der Unterseite des PV-Moduls 2 angeordnet ist, und zwar jeweils bezogen auf die aktive Fläche 9. Denn da die Sonnenstrahlen stets von oben einfallen, kann die untere Modulhalterung 6c sehr nahe an den äußeren Rand 30 der aktiven Fläche 9 heranrücken, ohne dass eine relevante Verschattung zu befürchten ist. Durch eine solche Ausgestaltung kann die Bauhöhe der PV-Anlage 1 verringert werden, was günstig für die Aufnahme von Windlasten ist, insbesondere wenn mehrere PV-Module 2 übereinander angeordnet werden.

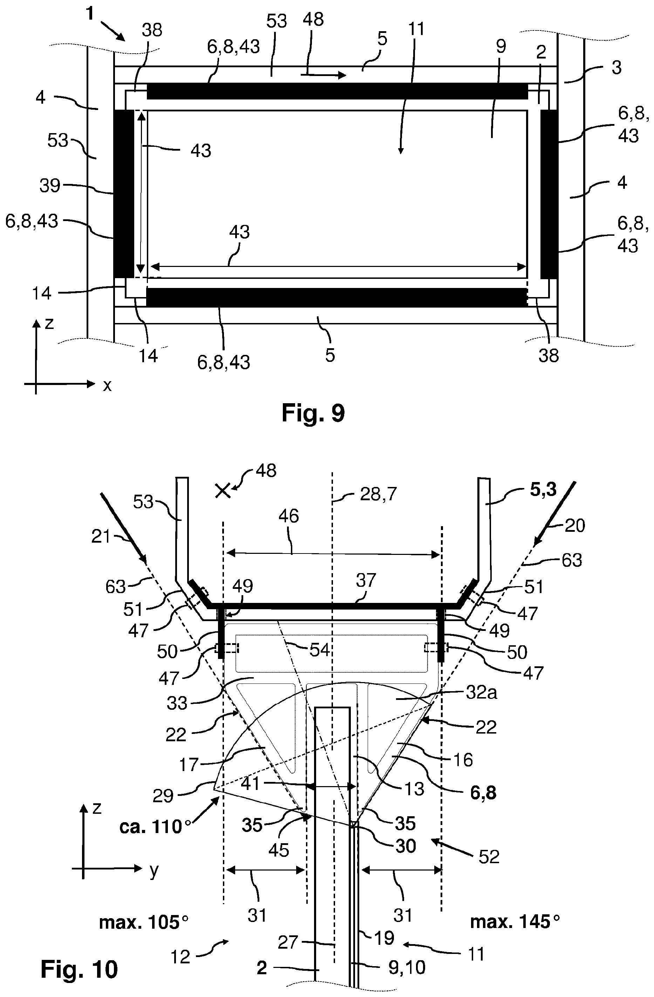

Die Figur 9 zeigt eine weitere mögliche Ausgestaltung des erfindungsgemäßen Sets: Hier sind ebenfalls insgesamt vier Modulhalterungen 6 in Form separater Modulhalteelemente 43 vorgesehen, die jedoch, anders als bei dem Beispiel der Figur 8, nicht zu einem umlaufenden Modulrahmen 43 zusammengefügt sind.

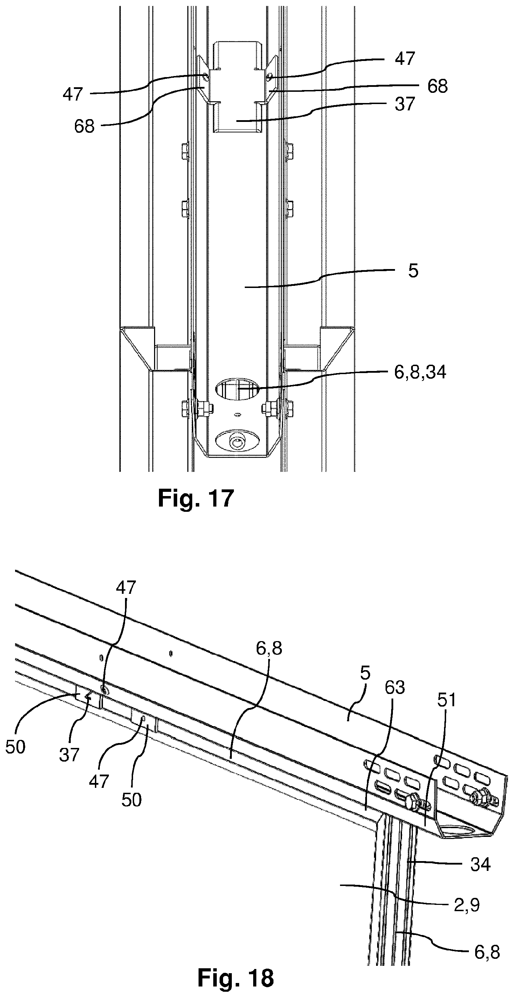

Die Figur 10 zeigt, wie etwa die obere Modulhalterung 6 in Figur 9 (oder die Modulhalterung 6a der Figur 8), die die obere Längsseite 38 des PV-Moduls 2 umgreift, mit dem darüber liegenden Riegel 5 verbunden werden kann. Hierzu sind separate Befestigungselemente 37 vorgesehen, die in schlitzförmige Durchstecköffnungen 49 an der Unterseite des in Figur 10 gezeigten Riegels 5 eingesteckt sind (vgl. dazu auch Figur 17), um so die unterhalb des Riegels 5 angeordnete Modulhalterung 6 an dem Riegel 5 zu befestigen. Hierbei bildet das in Figur 10 gezeigte Befestigungselement 37 sowohl auf der Vorderseite 12 als auch auf der Rückseite 11 eine jeweilige Lasche 50 aus (Vgl. auch Figur 18), an welcher die Modulhalterung 6 befestigt ist.

In Figur 10 ist die Modulhalterung 6 analog zu dem Beispiel der Figur 6 ausgestaltet mit einer jeweiligen vorder- und rückseitigen Abschrägung 63, wodurch prinzipiell, wie dies in Figur 4 illustriert wurde, ein Verschattungswinkel von weniger als 90° erzielt werden kann, sodass sowohl vorder- als auch rückseitig wenigstens ein maximaler verschattungsfreier Einfallswinkel von 110° erreichbar sein sollte. Hierfür muss aber ein geeignetes PV-Modul 2 ausgewählt werden, wobei es dabei insbesondere auf die laterale Lage der aktiven Fläche 9 ankommt, als auch auf den Versatz 57, der zwischen dem modulseitigen Ende 52 der Modulhalterung 6 und dem äußeren Rand 30 der aktiven Fläche 9 besteht (vergleiche dazu Figur 12). Dieser Versatz 57 hängt einerseits ab vom sogenannten Zell-Randabstand 61, also dem Abstand zwischen der Außenkante des PV-Moduls 2 und dem äußeren Rand 30 der aktiven Fläche 9 (vgl. hierzu Figur 2 oder Figur 12) als auch von der Einstecktiefe des PV-Moduls 2 in die Aufnahme 13 der Modulhalterung 6 (der Abstand 66 zwischen dem äußeren Rand 14 des PV-Moduls 2 und einem von der Modulhalterung 6 in der Aufnahme 13 gebildeten Anschlag kann variieren - vgl. dazu Figur 3). Bei dem in Figur 10 gezeigten Beispiel ist aber sowohl der laterale Versatz der aktiven Fläche 9 zur Mittelebene 27 des PV-Moduls 2 als auch der Versatz 57 zwischen dem äußeren Rand 30 der aktiven Fläche 9 und dem modulseitigen Ende 52 der Modulhalterung 6 so ungünstig gewählt, dass sich ein Verschattungswinkel von ca. 110° ergibt und zudem eine starke Verkippung des Verschattungswinkels 29 zur Vorderseite 12 hin (man beachte dazu die Winkelhalbierende 54 in Figur 10, die einen Verkippungswinkel 55 von mehr als 20° in Bezug auf die Ebene 10 der aktiven Fläche 9 einnimmt.) Daher kann auch vorderseitig nur ein maximaler verschattungsfreier Einfallswinkel auf die aktive Fläche 9 von 105° erzielt werden, was zu Leistungsverlusten führen würde.

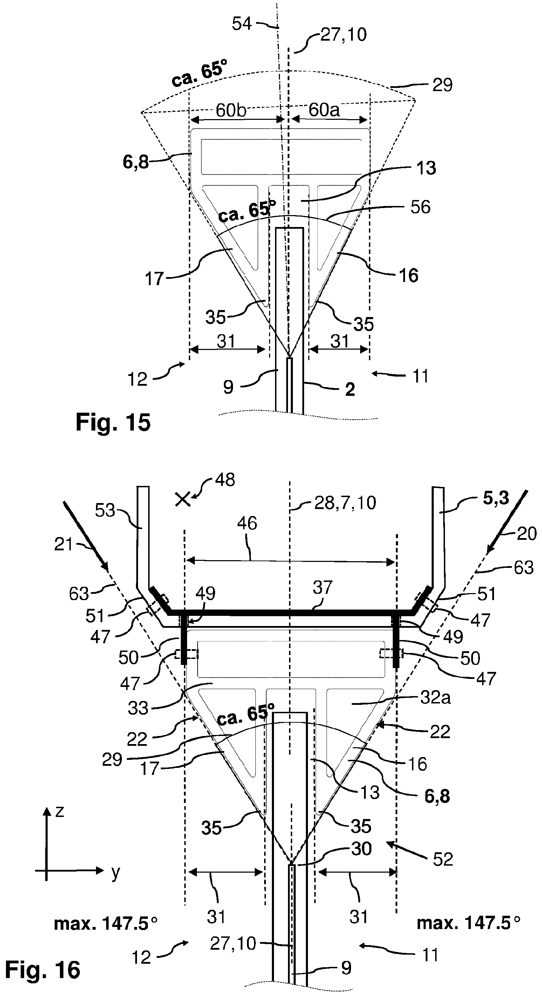

Wie die Figur 16 zeigt, kann aber durch Verwendung eines PV-Moduls 2 mit mittig angeordneter aktive Fläche 9 bei sonst gleicher Konstruktion der Modulhalterung 6 als auch des zugehörigen Riegels 5 die Situation so stark verbessert werden, dass nun der Verschattungswinkel nur noch 65° beträgt und vorder- als auch rückseitig maximale verschattungsfreie Einfallswinkel von mehr als 145° erzielt werden können.

Diese Situation ist auch nochmals im Detail in Figur 11 gezeigt: Man erkennt dort, dass die vorder- und rückseitige Abschrägung 63 der Modulhalterung 6, die jeweils symmetrisch in Bezug auf die gezeigte Symmetrieebene 28 der Modulhalterung 6 ausgebildet sind, einen Öffnungswinkel 56 von ca. 65° aufspannen. Wird wie in Figur 11 ein PV-Modul 2 verwendet, bei welchem die aktive Fläche 9 in einer Mittelebene 27 des PV-Moduls 2 angeordnet ist, so kann das PV-Modul 2 gerade so weit in die Aufnahme 13 eingeschoben werden, dass der auf den äußeren Rand 30 der aktiven Fläche 9 wirkende Verschattungswinkel 29 gerade dem Öffnungswinkel 56 entspricht, wie dies in Figur 11 illustriert ist.

Die Figur 12 zeigt demgegenüber in der linken Hälfte, dass der Verschattungswinkel 29 erheblich zunimmt, wenn die aktive Fläche 9 näher an das modulseitige Ende 52 der Modulhalterung 6 heranrückt. Dieses Heranrücken erscheint zunächst günstig, um die aktive Fläche 9, bezogen auf die Gesamtgröße des PV-Moduls 2, möglichst groß auslegen zu können, also einen vergleichsweise geringen Zell-Randabstand 61 verwenden zu können. Der Nachteil eines geringen Versatzes 57 besteht aber darin, dass dann die maximalen verschattungsfreien Winkel unter Umständen eingeschränkt werden (wobei Toleranzen beim Einsetzen der PV-Module 2 in die Modulhalterung 6 zu berücksichtigen sind).

Der rechte Teil der Figur 12 zeigt, dass der durch die Modulhalterung 6 verursachte Verschattungswinkel 29 sogar kleiner ausfallen kann als der von der Modulhalterung 6 aufgespannt Öffnungswinkel 56, nämlich dann, wenn der besagte Versatz 57 entsprechend groß gewählt ist. Ein solch großer Versatz führt aber zum Verlust aktiver Fläche 9 und damit zu einer geringeren Stromproduktion. Daher sollte der besagte Versatz 57 bevorzugt höchstens 20 % größer ausfallen als ein Mindestversatz, der eingehalten werden muss, um den gewünschten jeweiligen maximalen verschattungsfreien Einfallswinkel auf der Vorderseite 12 oder der Rückseite 11 zu gewährleisten. Beispielsweise könnte in Figur 11 die aktive Fläche 9 noch etwas näher an das modulseitige Ende 52 heranrücken, sofern nur ein maximaler verschattungsfreier vorder- und rückseitiger Einfallswinkel von jeweils 135° gewünscht ist.

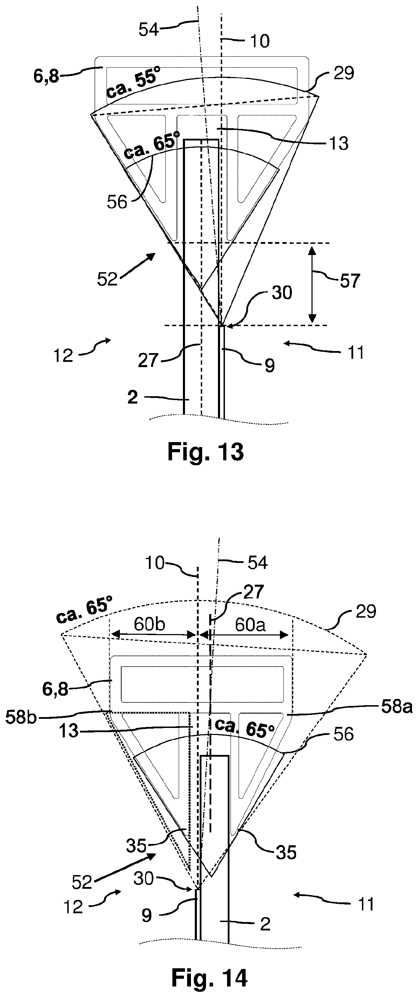

Die Figur 13 geht von dem Beispiel der Figur 11 aus, allerdings ist hier nun ein PV-Modul 2 in dieselbe Modulhalterung 6 eingesetzt, bei welchem die aktive Fläche 9 zur Mittelebene 27 des PV-Moduls 2 lateral versetzt ist. Hier wurde aber nun dennoch ein vergleichsweise großer maximaler verschattungsfreier Einfallswinkel 23, 24 auf der Vorderseite 12 als auch auf der Rückseite 11 dadurch gewährleistet, dass ein vergleichsweise großer Versatz 57 gewählt wurde. Hieraus resultiert auch ein geringer Verkippungswinkel 55 von weniger als 15° und auch ein vergleichsweise geringer Verschattungswinkel von ca. 55°. Eine solche Ausgestaltung kann sich etwa anbieten, wenn ein PV-Modul 2 verwendet wird, was ohnehin einen vergleichsweise großen Zell-Randabstand 61 (vgl. Figur 12) aufweist.

Die Figur 14 zeigt ein weiteres Beispiel eines erfindungsgemäß ausgestalteten Sets. Hierbei wird nun aber eine Modulhalterung 6 verwendet, die asymmetrisch ausgestaltet ist in Bezug auf die gezeigte Mittelebene 27 des PV-Moduls 2. Wie zu erkennen ist, unterscheiden sich jedoch die lateralen Abstände 60a und 60b zwischen der Modulebene 10 der aktiven Fläche 9 und dem jeweiligen Außenpunkt 58a, 58b der Modulhalterung 6 nur sehr wenig. Hier wird also die Tatsache, dass die aktive Fläche 9 des PV-Moduls 2 zur Vorderseite 12 hin versetzt ist, durch die asymmetrische Ausgestaltung der Modulhalterung 6 zumindest teilweise ausgeglichen, sodass immer noch ein vergleichsweise geringer Verschattungswinkel von ca. 65° erzielt werden kann, bei vergleichsweise geringem Versatz 57 zwischen dem modulseitigen Ende 52 der Modulhalterung 6 und dem äußeren Rand 30 der aktiven Fläche 9.

Wie das Beispiel der Figur 15 zeigt, kann auch eine asymmetrisch ausgestaltete Modulhalterung 6 erfindungsgemäß mit einem PV-Modul 2 verwendet werden, dessen aktive Fläche 9 mittig positioniert ist in Bezug auf Außenkanten/-flächen des PV-Moduls 2. Die Asymmetrie der Modulhalterung 6 ist beispielsweise an den unterschiedlich großen lateralen Erstreckungen 31 der beiden Schenkel 16 und 17 zu erkennen.

Allen erfindungsgemäßen Ausgestaltungen gemäß den Figuren 3 bis 9 sowie 11 bis 16 ist dabei gemeinsam, dass die jeweils verwendete Modulhalterung 6 zurückversetzte Außenpunkte 58a und 58b aufweist, sodass jeweils die modulseitigen Spitzen 35 der beiden Schenkel 16 und 17 das modulseitige Ende 52 ausbilden, dass ferner jeweils vorder- als auch rückseitig ein maximaler verschattungsfreier Einfallswinkel von wenigstens 110° gewährleistet ist und dass die Verkippung des jeweils eingestellten Verschattungswinkels 29, bezogen auf die Ebene 10 der aktiven Fläche 9, jeweils betragsmäßig höchstens 15° beträgt. Dadurch kann in allen diesen Ausgestaltungsbeispielen eine hohe Effizienz der solaren Stromproduktion sowohl bei vorderseitiger als auch bei rückseitiger Bestrahlung des bifazialen PV-Moduls 2 erzielt werden.

Die Figuren 17 und 18 zeigen noch perspektivische Ansichten eines horizontal verlaufenden oberen Riegels 5 einer Tragkonstruktion 3 einer erfindungsgemäßen PV-Anlage 1, wobei die Ausgestaltung dem Schema der Figur 16 entspricht. Zu erkennen sind in den Figuren 17 und 18 ein wie bereits zuvor erläutertes separates Befestigungselement 37, welches in den nach oben halb offenen Riegel 5, der mittels eines C-Profils ausgestaltet ist, eingesteckt ist, um so die unter dem Riegel 5 angeordnete Modulhalterung 6 samt dem von ihr gehaltenen PV-Modul 2 an dem Riegel 5 zu befestigen. In Figur 18 sind dabei die beiden vorderseitigen Laschen 50 zu erkennen, die von dem Befestigungselement 37 zum Halten der Modulhalterung 6 ausgebildet sind. In Figur 17 erkennt man auch, dass das Befestigungselement 37 vorder- und rückseitig jeweils einen Anlageschenkel 68 ausbildet, der sich in der Montageposition innenseitig an dem Riegel 5 abstützt und mit diesem verschraubt ist.

Zusammenfassend wird zum sicheren Halten eines aufrecht stehenden Photovoltaik (PV)-Moduls 2 eine zugehörige ausreichend feste Modulhalterung 6 vorgeschlagen, die eine oder mehrere äußere Kanten des PV-Moduls 2 gegen Windlasten stabilisieren kann und dabei gleichzeitig die Anfälligkeit des PV-Moduls 2 gegen Verschattung durch die zugehörige Modulhalterung 6 minimiert. Hierzu ist vorgesehen, die Modulhalterung 6 mit konvexer Form auszubilden, dabei vorder-und rückseitig große maximale verschattungsfreie Einfallswinkel 23, 24 zu ermöglichen, und gleichzeitig eine möglichst geringe jeweilige laterale Ausdehnung der Modulhalterung 6 in einer Richtung quer zu einer aktiven Fläche 9 des PV-Moduls 2 zu erzielen, und zwar sowohl vorder-als auch rückseitig. Hierdurch wird es möglich, leistungsfähige PV-Anlagen 1 zu erhalten, auf Basis einer Tragkonstruktion 3, die mit Hilfe von erfindungsgemäß ausgestalteten Modulhalterungen 6 großflächige bifaziale PV-Module 2 aufrecht stehend und weitgehend verschattungsfrei trägt.

### Bezugszeichenliste

- 1: Photovoltaik-Anlage
- 2: Photovoltaik-Modul
- 3: Tragkonstruktion
- 4: Pfosten
- 5: Riegel
- 6: Modulhalterung (zum Positionieren / Halten von 2)
- 7: Modul-Ebene (gebildet durch mehrere 2 oder durch 9)
- 8: Hohlprofil
- 9: aktive Fläche (von 2)
- 10: Ebene der aktiven Fläche (also Ebene von 9)
- 11: Rückseite (von 2)
- 12: Vorderseite (von 2)
- 13: Aufnahme
- 14: (äußerer) Rand (von 2)
- 15: Einsetzrichtung (entlang derer 2 in 13 einsetzbar ist)
- 16: hinterer Schenkel (von 6, definiert 13)
- 17: vorderer Schenkel (von 6, definiert 13)
- 18: Aufschubrichtung (in welcher 6 auf 2 aufschiebbar ist, entgegengesetzt zu 15)
- 19: Deck-/Schutzschicht, insbesondere ausgestaltet als Antireflektionsschicht
- 20: einfallender Sonnenstrahl (fällt auf 11 ein)
- 21: einfallender Sonnenstrahl (fällt auf 12 ein)
- 22: Außenkontur (von 6)
- 23: maximaler verschattungsfreier Einfallswinkel (bzgl. 11)
- 24: maximaler verschattungsfreier Einfallswinkel (bzgl. 12)
- 25: Einhüllende (von 6, gesehen in Richtung von 15)
- 26: Flächennormale (auf 9 beziehungsweise 10)
- 27: Mittelebene (von 2 oder 6)
- 28: Symmetrieebene (von 6)
- 29: Verschattungswinkel
- 30: (äußerer) Rand (von 9)
- 31: laterale Erstreckung (von 16, 17, quer zu 10 und gemessen ab 13)
- 32: Hohlkammer
- 33: Hohlkammerwandung (verbindet 16 und 17)
- 34: Modulrahmen
- 35: modulseitige Spitze (von 16/17)
- 36: Beabstandung (zwischen 35 und 9)
- 37: Befestigungselement (zum Befestigen von 6/34 an 4/5)
- 38: Längsseite (von 2/14)
- 39: Querseite (von 2/14)
- 40: Einstecktiefe (von 2 in 6/13)
- 41: Mindestbreite (von 13)
- 42: Fügestelle (zwischen 6/43, zur Ausbildung von 34)
- 43: Modulhalteelement
- 44: Teilabschnitt (von 14)
- 45: Einführöffnung (von 13, zum Einführen von 2 in 13)
- 46: (laterale) Gesamterstreckung (von 6)
- 47: Verschraubung
- 48: Längsrichtung (von 5)
- 49: Durchstecköffnung (ausgebildet in 5, zum Einstecken von 37 in 5)
- 50: Laschen (von 37, zum Befestigen von 6)
- 51: Abschrägung (an 5)
- 52: modulseitiges Ende (von 6)
- 53: Längsprofil
- 54: Winkelhalbierende (von 29)
- 55: Verkippungswinkel
- 56: Öffnungswinkel (von 6)
- 57: Versatz (zwischen 30 und 52)
- 58: Außenpunkte (von 6, jeweils lateral beabstandet zu 10)
- 59: Querschnittsbreite (von 52)
- 60: lateraler Abstand zwischen der Modulebene und der Modulhalterung, insbesondere lateraler Zellebene-Rahmenabstand (= lateraler Abstand zw. 58 und 10)
- 61: Zell-Randabstand (Abstand zwischen Außenkante von 2 und 30)
- 62: Verschattungslänge
- 63: Abschrägung
- 64: maximale Einstecktiefe (von 13)
- 65: maximale Breite (von 6 in Richtung von 15)
- 66: Abstand (zwischen 14 und Anschlag gebildet durch 6)
- 67: Stabilisierungsschenkel
- 68: Anlageschenkel (von 37 zur Anlage an 5)
- 69: Modulebene
- 70: geometrischer Schwerpunkt (von 32c)
- 71: Wandstärkenverdickung

## Patentansprüche

1. **Set aus einer Modulhalterung (6) und einem zugehörigen bifazialen Photovoltaik-Modul (2),**
- wobei das Photovoltaik-Modul (2) als ein rahmenloses Laminat ausgestaltet ist und eine aktive Fläche (9) aufweist, die von einer Vorderseite (12) und von einer Rückseite (11) des Photovoltaik-Moduls (2) her Sonnenlicht empfangen kann, um das Sonnenlicht in elektrischen Strom umzuwandeln, wobei die aktive Fläche (9) des Photovoltaik-Moduls (2) in einer Modulebene (10,69) verläuft,
- wobei die Modulhalterung (6) eine Aufnahme (13) bietet, in welche ein äußerer Rand (14) des Laminats in einer Einsetzrichtung (15) eingesetzt und so in Position gehalten ist,
- wobei die Aufnahme (13), bezogen auf eine Ebene (10) der aktiven Fläche (9) des rahmenlosen Photovoltaik-Moduls (2), vorderseitig durch einen vorderen Schenkel (17) und/oder rückseitig durch einen hinteren Schenkel (16) der Modulhalterung (6) begrenzt ist, wobei:
- jeweilige vorder- und rückseitige für eine Verschattung der aktiven Fläche (9) durch die Modulhalterung (6) relevante Außenpunkte (58a, 58b) eines senkrecht zu einer Ebene (10) der aktiven Fläche (9) verlaufenden Querschnitts der Modulhalterung (6) in der Einsetzrichtung (15) und bezogen auf jeweilige modulseitige Spitzen (35) der beiden Schenkel (16, 17) zurückversetzt sind,
- die beiden Schenkel (16, 17) der Modulhalterung (6) als Teil eines Hohlprofils (8) ausgestaltet sind,
- eine geschlossene Hohlkammerwandung (33) dieses Hohlprofils (8) eine Hohlkammer (32c) ausbildet und
- ein geometrischer Schwerpunkt (70) dieser Hohlkammer (32c) einen lateralen Abstand quer zu der Modulebene (10,69) zeigt, wobei dieser laterale Abstand weniger als 25% einer lateralen Ausdehnung der Hohlkammer (32c) quer zu der Modulebene (10,69) beträgt.

2. Set gemäß Anspruch 1,
- wobei eine Außenkontur (22) der Modulhalterung (6), insbesondere die Einhüllende (25), bezogen auf eine senkrecht zu einer Ebene (10) der aktiven Fläche (9) verlaufende Querschnittsebene der Modulhalterung (6), innerhalb eines in der Querschnittsebene aufgespannten Verschattungswinkels (29) liegt, der von einem äußeren Rand (30) der aktiven Fläche (9) ausgeht, und
- dass eine Winkelhalbierende (54) des Verschattungswinkels (29) mit der Ebene (10) der aktiven Fläche (9) einen Verkippungswinkel (55) von betragsmäßig höchstens 15°, bevorzugt von höchstens 10°, einschließt.

3. Set nach Anspruch 2,
- wobei der Verschattungswinkel (29) höchstens 100°, bevorzugt höchstens 90°, beträgt.

4. Set gemäß einem der vorhergehenden Ansprüche,
- wobei eine/die Außenkontur (22) der Modulhalterung (6) so ausgestaltet ist, dass sowohl
- ein maximaler verschattungsfreier Einfallswinkel (23), unter dem ein einfallender Sonnenstrahl (20) einen äußeren Rand (30) der aktiven Fläche (9) von der Vorderseite (12) her erreichen kann, als auch
- ein maximaler verschattungsfreier Einfallswinkel (24), unter dem ein einfallender Sonnenstrahl (21) den äußeren Rand (30) der aktiven Fläche (9) von der Rückseite (11) her erreichen kann,
jeweils, gemessen in Bezug auf die aktive Fläche (9), wenigstens 110°, bevorzugt wenigstens 120°, besonders bevorzugt wenigstens 135°, beträgt.

5. Set nach einem der vorhergehenden Ansprüche, wobei die beiden Schenkel (16, 17) der Modulhalterung (6) eine jeweilige Außenkontur (22) ausbilden, die innerhalb einer Abschrägung (63) der Modulhalterung (6) verbleibt, die auf eine modulseitige Einführöffnung (45) der Aufnahme (13) zuläuft,
- vorzugsweise wobei die jeweilige Abschrägung (63) jeweils einen Winkel zur aktiven Fläche (9) von wenigstens 110°, bevorzugt von wenigstens 120°, besonders bevorzugt von wenigstens 135°, ausbildet,
- insbesondere wobei die jeweilige Außenkontur (22) eines der Schenkel (16, 17) stellenweise von der Abschrägung (63) nach innen auf die Aufnahme (13) hin abweicht.

6. Set nach einem der vorhergehenden Ansprüche, wobei die beiden Schenkel (16, 17) der Modulhalterung (6) jeweils eine laterale Erstreckung (31), quer zur einer Mittelebene (27) des Photovoltaik-Moduls (2) und jeweils gemessen von der Aufnahme (13) aus, zeigen, die wenigstens 25%, vorzugsweise wenigstens 50%, besonders bevorzugt wenigstens 75%, einer Mindestbreite (41) der Aufnahme (13), in Richtung einer Flächennormalen (26) der aktiven Fläche (9), beträgt,
- insbesondere wobei sich eine Breite der Aufnahme (13) in der Einsetzrichtung (15) vergrößert und/oder
- wobei die Mittelebene (27) des Photovoltaik-Moduls (2) lateral versetzt ist zu einer Mittelebene der Aufnahme (13) oder zu einer Mittelebene (27) der Modulhalterung (6) .

7. Set nach einem der vorhergehenden Ansprüche, wobei die gesamte Modulhalterung (6) durch das Hohlprofil (8) gebildet ist,
- besonders bevorzugt wobei die beiden Schenkel (16, 17) über die in sich geschlossene Hohlkammerwandung (33) des Hohlprofils (8) miteinander mechanisch verbunden sind und/oder
- wobei die Hohlkammer (32c) in der Einsetzrichtung (15) auf die Aufnahme (13) folgt und/oder
- wobei das Hohlprofil (8), im Bereich der Aufnahme (13) eine Wandstärkenverdickung (71) aufweist, die in der Modulebene (69) liegt, und/oder
- wobei die Modulhalterung (6) an ihrem modulseitigen Ende (52) eine Querschnittsbreite (59) quer zur Einsetzrichtung (15) aufweist, die höchstens der Summe der Mindestbreite (41) der Aufnahme (13) und zweimal einer Materialstärke (56) des Hohl-Profils (8) entspricht.

8. Set nach einem der vorhergehenden Ansprüche,
wobei die Modulhalterung (6) als ein Modulhalteelement (43) ausgestaltet ist, welches lediglich einen Teilabschnitt (43) des umlaufenden äußeren Rands (14) des Photovoltaik-Moduls (2) umgreift oder zumindest einseitig abstützt,
- vorzugsweise wobei das Set (1) mehrere solcher Modulhalteelemente (34) umfasst, die jeweils Teilabschnitte (43) des äußeren Rands (14), insbesondere Teilabschnitte (43a, 43b) einer jeweiligen Längsseite (38) oder Querseite (39) des Photovoltaik-Moduls (2), umgreifen oder zumindest einseitig abstützen.

9. Set nach einem der Ansprüche 1 bis 7,
wobei das Set wenigstens vier Modulhalterungen (6a, 6b, 6c, 6d) umfasst, die zusammen einen um das Photovoltaik-Modul (2) umlaufenden, vorzugsweise rechteckigen, Modulrahmen (34) ausbilden,
- insbesondere wobei hierzu die Modulhalterungen (6a, 6b, 6c, 6d) an mehreren Fügestellen (42) zu dem Modulrahmen (34) zusammengefügt sind,
- bevorzugt wobei eine Beabstandung (36a) einer Spitze (35) einer oberen Modulhalterung (6a), die an einer Oberseite des Photovoltaik-Moduls (2) angeordnet ist, größer gewählt ist als eine Beabstandung (36c) einer Spitze (35) einer unteren Modulhalterung (6c), die an einer Unterseite des Photovoltaik-Moduls (2) angeordnet ist, jeweils bezogen auf die aktive Fläche (9).

10. Set nach einem der vorhergehenden Ansprüche, wobei der Rand (14) des Photovoltaik-Moduls (2) in der Aufnahme (13)
- klemmend gehalten und/oder
- eingeklebt, insbesondere mit Hilfe eines Klebebands,
- vorzugsweise mittels einer Dichtungsmasse (41) abdichtend eingeklebt,
ist.

11. Set nach einem der vorhergehenden Ansprüche,
wobei eine Spitze (35) des vorderen Schenkels (17) und/oder des hinteren Schenkels (16) das modulseitige Ende (52) der Modulhalterung (6) ausbildet,
- vorzugsweise wobei das modulseitige Ende (52) innerhalb des Verschattungswinkels (29) liegt.

12. **Photovoltaik-Anlage (1)** mit
- einer Tragkonstruktion (3), an welcher mehrere bifaziale Photovoltaik-Module (2) aufrechtstehend angeordnet sind,
- wobei die Tragkonstruktion (3) mehrere Pfosten (4) aufweist, die an oder im Erdreich befestigt, insbesondere verankert, sind und wobei an den Pfosten (4) Riegel (5) befestigt sind, die jeweils zwei benachbarte Pfosten (4) miteinander verbinden, **dadurch gekennzeichnet,**
- **dass** die Photovoltaik-Module (2) jeweils als rahmenlose Laminate ausgestaltet und mittels wenigstens einer jeweiligen Modulhalterung (6) an der Tragkonstruktion (3) befestigt sind, und
- **dass** das jeweilige bifaziale und rahmenlose Photovoltaik-Modul (2) und die zugehörige wenigstens eine Modulhalterung (6) jeweils ein Set (1) bilden, welches gemäß einem der Ansprüche 1 bis 11 ausgestaltet ist.

13. Photovoltaik-Anlage (1) nach dem vorhergehenden Anspruch, wobei das jeweilige durch ein Photovoltaik-Modul (2) und die zugehörige wenigstens eine Modulhalterung (6) gebildete Set (1),
- eine Modulhalterung (6) umfasst, die an einem der Pfosten (4), vorzugsweise mittels separater Befestigungselemente (37), befestigt ist und/oder
- eine Modulhalterung (6) umfasst, die unterhalb eines der Riegel (5), vorzugsweise mittels separater Befestigungselemente (37), befestigt ist und/oder
- eine Modulhalterung (6) umfasst, die oberhalb eines der Riegel (5), vorzugsweise mittels separater Befestigungselemente (37), befestigt ist.

14. Photovoltaik-Anlage (1) nach einem der Ansprüche 12 bis 13, wobei die Tragkonstruktion (3) Riegel (5) umfasst, an deren Unterseite eine Modulhalterung (6) eines der Sets (1), vorzugsweise mittels separater Befestigungselemente (37), aufgehängt ist und/oder Riegel (5) umfasst, an deren Oberseite eine Modulhalterung (6) eines der Sets (1), vorzugsweise mittels separater Befestigungselemente (37), befestigt ist, und
- wobei ein Querschnitt des jeweiligen Riegels (5), der quer zu einer Längsrichtung (48) des Riegels (5) verläuft, so gewählt ist, dass ein jeweiliger maximaler verschattungsfreier Einfallswinkel (23, 24), unter dem ein jeweiliger einfallender Sonnenstrahl (20, 21) die aktive Fläche (9) des Photovoltaik-Moduls (2) von der Vorderseite (12) oder von der Rückseite (11) her erreichen kann, durch eine Außenkontur (22) der Modulhalterung (6) festgelegt ist.

15. Photovoltaik-Anlage (1) nach einem der Ansprüche 12 bis 14, wobei diejenigen Riegel (5), an deren Unterseite eines der Sets (1) montiert ist, mittels eines nach oben halboffenen Längsprofils (53), vorzugsweise in Form eines C-Profils, ausgestaltet sind und/oder
- wobei einzelne der Befestigungselemente (37) in, vorzugsweise schlitzförmigen, Durchstecköffnungen (49) an der Unterseite von Riegeln (5) eingesteckt sind, um so eine unter dem Riegel (5) angeordnete Modulhalterung (6) eines der Sets (1) an dem Riegel (5) zu befestigen und/oder
- wobei die Befestigungselemente (37) vorder- und rückseitig jeweilige Laschen (50) ausbilden, an welchen die Modulhalterung (6) des zugehörigen Sets (1) montiert, vorzugsweise verklemmt oder verschraubt, ist.

## Claims

1. **A set formed of a module holder (6) and an associated bifacial photovoltaic module (2),**
- wherein the photovoltaic module (2) is designed as a frameless laminate and has an active surface (9) that can receive sunlight from a front side (12) and a rear side (11) of the photovoltaic module (2) in order to convert the sunlight into electrical current, wherein the active surface (9) of the photovoltaic module (2) extends in a module plane (10, 69),
- wherein the module holder (6) provides a receptacle (13) into which an outer edge (14) of the laminate is inserted in an insertion direction (15) and thus held in position,
- wherein the receptacle (13), relative to a plane (10) of the active surface (9) of the frameless photovoltaic module (2), is delimited at the front by a front leg (17) and/or at the rear by a rear leg (16) of the module holder (6), wherein:
- respective front and rear outer points (58a, 58b), which are relevant for shading the active surface (9) by the module holder (6), of a cross-section of the module holder (6) extending perpendicularly to a plane (10) of the active surface (9) are set back in the insertion direction (15) and with respect to respective module-side tips (35) of the two legs (16, 17),
- the two legs (16, 17) of the module holder (6) are designed as part of a hollow profile (8),
- a closed hollow chamber wall (33) of this hollow profile (8) forms a hollow chamber (32c), and
- a geometric center of gravity (70) of this hollow chamber (32c) has a lateral distance transverse to the module plane (10, 69), wherein said lateral distance is less than 25% of a lateral extent of the hollow chamber (32c) transverse to the module plane (10, 69).

2. The set according to claim 1,
- wherein an outer contour (22) of the module holder (6), in particular the envelope (25), lies within a shading angle (29), which extends in the cross-sectional plane and starts from an outer edge (30) of the active surface (9), with respect to a cross-sectional plane of the module holder (6) extending perpendicularly to a plane (10) of the active surface (9), and
- in that an angle bisector (54) of the shading angle (29) with the plane (10) of the active surface (9) encloses a tilt angle (55) of at most 15°, preferably at most 10°.

3. The set as claimed in claim 2,
- wherein the shading angle (29) is at most 100°, preferably at most 90°.

4. The set according to one of the preceding claims,
- wherein an/the outer contour (22) of the module holder (6) is designed in such a way that both
- a maximum shading-free angle of incidence (23) at which an incident sun ray (20) can reach an outer edge (30) of the active surface (9) from the front side (12), as well as
- a maximum shading-free angle of incidence (24) at which an incident sun ray (21) can reach the outer edge (30) of the active surface (9) from the rear side (11),
in each case, measured in relation to the active surface (9), is at least 110°, preferably at least 120°, particularly preferably at least 135°.

5. The set as claimed in one of the preceding claims, wherein the two legs (16, 17) of the module holder (6) form a respective outer contour (22) which remains within a bevel (63) of the module holder (6) which runs towards a module-side insertion opening (45) of the receptacle (13),
- preferably wherein the respective bevel (63) forms in each case an angle to the active surface (9) of at least 110°, preferably of at least 120°, particularly preferably of at least 135°,
- in particular wherein the respective outer contour (22) of one of the legs (16, 17) deviates in places from the bevel (63) inwards towards the receptacle (13).

6. The set as claimed in one of the preceding claims,
wherein the two legs (16, 17) of the module holder (6) each show a lateral extent (31), transverse to a center plane (27) of the photovoltaic module (2) and in each case measured from the receptacle (13), which is at least 25%, preferably at least 50%, particularly preferably at least 75%, of a minimum width (41) of the receptacle (13) in the direction of a surface normal (26) of the active surface (9),
- in particular wherein a width of the receptacle (13) increases in the insertion direction (15), and/or
- wherein the center plane (27) of the photovoltaic module (2) is laterally offset from a center plane of the receptacle (13) or from a center plane (27) of the module holder (6).

7. The set as claimed in one of the preceding claims,
wherein the entire module holder (6) is formed by the hollow profile (8),
- particularly preferably wherein the two legs (16, 17) are mechanically connected to one another via a closed hollow chamber wall (33) of the hollow profile (8), and/or
- wherein the hollow chamber (32c) follows the receptacle (13) in the insertion direction (15), and/or
- wherein the hollow profile (8) has a wall thickness thickening (71) in the region of the receptacle (13), which thickening lies in the module plane (69), and/or
- wherein the module holder (6) has at its module-side end (52) a cross-sectional width (59) transverse to the insertion direction (15), which corresponds at most to the sum of the minimum width (41) of the receptacle (13) and twice a material thickness (56) of the hollow profile (8).

8. The set as claimed in one of the preceding claims,
wherein the module holder (6) is designed as a module holding element (43) which embraces only a partial portion (43) of the circumferential outer edge (14) of the photovoltaic module (2) or supports it at least on one side,
- preferably wherein the set (1) comprises a plurality of such module holding elements (34), each of which embraces or supports at least on one side partial portions (43) of the outer edge (14), in particular partial portions (43a, 43b) of a respective longitudinal side (38) or transverse side (39) of the photovoltaic module (2).

9. The set as claimed in one of claims 1 to 7,
wherein the set comprises at least four module holders (6a, 6b, 6c, 6d) which together form a preferably rectangular module frame (34) surrounding the photovoltaic module (2),
- in particular wherein the module holders (6a, 6b, 6c, 6d) are joined together at several joints (42) to form the module frame (34),
- preferably wherein a spacing (36a) of a tip (35) of an upper module holder (6a), which is arranged on an upper side of the photovoltaic module (2), is selected to be greater than a spacing (36c) of a tip (35) of a lower module holder (6c), which is arranged on an underside of the photovoltaic module (2), in each case in relation to the active surface (9).

10. The set as claimed in one of the preceding claims,
wherein the edge (14) of the photovoltaic module (2) in the receptacle (13)
- is held in a clamped manner and/or
- is glued in, in particular with the aid of an adhesive tape,
- preferably is glued sealingly by means of a sealing compound (41).

11. The set as claimed in one of the preceding claims,
wherein a tip (35) of the front leg (17) and/or of the rear leg (16) forms the module-side end (52) of the module holder (6),
- preferably wherein the module-side end (52) lies within the shading angle (29).

12. **A photovoltaic system (1)** having
- a support structure (3) on which a plurality of bifacial photovoltaic modules (2) are arranged upright,
- wherein the support structure (3) has a plurality of posts (4) which are fastened to or in the ground, in particular anchored, and wherein transoms (5) are fastened to the posts (4) and in each case connect two adjacent posts (4) to one another, **characterized in**
- **that** the photovoltaic modules (2) are each designed as frameless laminates and are fastened to the support structure (3) by means of at least one respective module holder (6),
- **that** the respective bifacial and frameless photovoltaic module (2) and the associated at least one module holder (6) each form a set (1) which is designed as claimed in one of the claims 1 to 11.

13. A photovoltaic system (1) as claimed in the preceding claim, wherein the respective set (1) formed by a photovoltaic module (2) and the associated at least one module holder (6)
- comprises a module holder (6) which is fastened to one of the posts (4), preferably by means of separate fastening elements (37), and/or
- comprises a module holder (6), which is fastened below one of the transoms (5), preferably by means of separate fastening elements (37), and/or
- comprises a module holder (6), which is fastened above one of the transoms (5), preferably by means of separate fastening elements (37).

14. The photovoltaic system (1) as claimed in one of claims 12 to 13, wherein the support structure (3) comprises transoms (5), on the underside of which a module holder (6) of one of the sets (1) is suspended, preferably by means of separate fastening elements (37), and/or comprises transoms (5), on the upper side of which a module holder (6) of one of the sets (1) is fastened, preferably by means of separate fastening elements (37), and
- wherein a cross-section of the respective transom (5), which extends transversely to a longitudinal direction (48) of the transom (5), is selected such that a respective maximum shading-free angle of incidence (23, 24), at which a respective incident sun ray (20, 21) can reach the active surface (9) of the photovoltaic module (2) from the front side (12) or from the rear side (11), is defined by an outer contour (22) of the module holder (6).

15. The photovoltaic system (1) as claimed in one of claims 12 to 14, wherein those transoms (5) on the underside of which one of the sets (1) is mounted are formed by means of a longitudinal profile (53) which is half-open at the top, preferably in the form of a C-profile, and/or
- wherein individual ones of the fastening elements (37) are inserted into, preferably slot-shaped, push-through openings (49) on the underside of transoms (5) in order to fasten a module holder (6), arranged under the transom (5), of one of the sets (1) to the transom (5),
and/or
- wherein the fastening elements (37) form respective lugs (50) on the front and rear sides, to which the module holder (6) of the associated set (1) is mounted, preferably clamped or screwed.

## Revendications

1. Kit composé d'une monture de module (6) et d'un module photovoltaïque bifacial (2) correspondant,
- dans lequel le module photovoltaïque (2) est conçu comme un stratifié sans cadre et présente une surface active (9) qui peut capter la lumière du soleil depuis une face avant (12) et une face arrière (11) du module photovoltaïque (2) pour convertir la lumière solaire en courant électrique, la surface active (9) du module photovoltaïque (2) se trouvant dans un plan du module (10, 69),
- dans lequel la monture de module (6) forme un logement (13) dans lequel un bord extérieur (14) du stratifié est inséré dans un sens d'insertion (15) et retenu ainsi en position,
- dans lequel le logement (13) est délimité par un bras antérieur (17) sur l'avant, par rapport à un plan (10) de la surface active (9) du module photovoltaïque (2) sans cadre, et/ou par un bras postérieur (16) de la monture de module (6) sur l'arrière,
- des points extérieurs avant et arrière respectifs (58a, 58b) d'une section de la monture de module (6) perpendiculaire à un plan (10) de la surface active (9), qui contribuent à une occultation de la surface active (9) par la monture de module (6), étant décalés dans le sens d'insertion (15) et par rapport à des pointes (35) respectives des deux bras (16, 17) situées du côté du module,
- les deux bras (16, 17) de la monture de module (6) étant conçus comme une partie d'un profilé creux (8),
- une paroi de compartiment creux (33) fermée de ce profilé creux (8) formant un compartiment creux (32c) et
- un barycentre géométrique (70) de ce compartiment creux (32c) présentant un écartement latéral transversalement par rapport au plan du module (10, 69), lequel écartement latéral représente moins de 25 % d'une étendue latérale du compartiment creux (32c) transversalement par rapport au plan du module (10, 69).

2. Kit selon la revendication 1,
- dans lequel un contour extérieur (22) de la monture de module (6), en particulier l'enveloppante (25), se situe, par rapport à un plan de coupe transversale de la monture de module (6) perpendiculaire à un plan (10) de la surface active (9), à l'intérieur d'un angle d'occultation (29) défini dans le plan de section qui part d'un bord extérieur (30) de la surface active (9) et
- une bissectrice d'angle (54) de l'angle d'occultation (29) forme avec le plan (10) de la surface active (9) un angle de basculement (55) de 15° au maximum, de préférence de 10° au maximum.

3. Kit selon la revendication 2,
- dans lequel l'angle d'occultation (29) est de 100° au maximum, de préférence de 90° au maximum.

4. Kit selon l'une des revendications précédentes,
- dans lequel un/le contour extérieur (22) de la monture de module (6) est conformé de telle manière qu'aussi bien
- un angle d'incidence sans occultation maximal (23) sous lequel un rayon de soleil incident (20) peut atteindre un bord extérieur (30) de la surface active (9) depuis la face avant (12)
- qu'un angle d'incidence sans occultation maximal (24) sous lequel un rayon de soleil incident (21) peut atteindre le bord extérieur (30) de la surface active (9) depuis la face arrière (11)
sont respectivement d'au moins 110°, de préférence d'au moins 120°, en particulier d'au moins 135°, par rapport à la surface active (9).

5. Kit selon l'une des revendications précédentes, dans lequel les deux bras (16, 17) de la monture de module (6) forment chacun un contour extérieur (22) qui reste à l'intérieur d'un chanfrein (63) de la monture de module (6) dirigé vers une ouverture d'entrée côté module (45) du logement (13),
- chaque chanfrein (63) formant de préférence un angle d'au moins 110°, de préférence d'au moins 120°, en particulier d'au moins 135°, par rapport à la surface active (9),
- le contour extérieur (22) de chacun des bras (16, 17) s'écartant en particulier par endroits du chanfrein (63) vers l'intérieur en direction du logement (13).

6. Kit selon l'une des revendications précédentes, dans lequel les deux bras (16, 17) de la monture de module (6) présentent chacun une étendue latérale (31), transversalement par rapport à un plan médian (27) du module photovoltaïque (2) et mesurée à partir du logement (13), qui représente au moins 25 %, de préférence au moins 50 %, en particulier au moins 75 %, d'une largeur minimale (41) du logement (13), en direction d'une perpendiculaire à la surface (26) de la surface active (9),
- une largeur du logement (13) augmentant en particulier dans le sens d'insertion (15) et/ou
- le plan médian (27) du module photovoltaïque (2) étant décalé latéralement par rapport à un plan médian du logement (13) ou à un plan médian (27) de la monture de module (6).

7. Kit selon l'une des revendications précédentes, dans lequel la monture de module (6) est entièrement formée par le profilé creux (8),
- les deux bras (16, 17) étant de préférence, notamment, reliés l'un à l'autre mécaniquement par la paroi de compartiment creux (33) fermée du profilé creux (8) et/ou
- le compartiment creux (32c) faisant suite au logement (13) dans le sens d'insertion (15) et/ou
- le profilé creux (8) présentant dans la région du logement (13) un épaississement de la paroi (71) qui se situe dans le plan du module (69) et/ou
- la monture de module (6) présentant, à son extrémité côté module (52), une largeur de section (59) transversalement par rapport au sens d'insertion (15) qui correspond au maximum à la somme de la largeur minimale (41) du logement (13) et du double d'une épaisseur de matériau (56) du profilé creux (8).

8. Kit selon l'une des revendications précédentes, dans lequel la monture de module (6) est conçue comme un élément de maintien de module (43) qui entoure ou soutient au moins sur un côté une partie (43) seulement du bord extérieur (14) circonférentiel du module photovoltaïque (2),
- le kit (1) comprenant de préférence plusieurs de ces éléments de maintien de module (34), qui entourent ou soutiennent au moins d'un côté des parties (43) respectives du bord extérieur (14), en particulier des parties (43a, 43b) d'un côté longitudinal (38) ou d'un côté transversal (39) correspondant du module photovoltaïque (2).

9. Kit selon l'une des revendications 1 à 7, lequel kit comprend au moins quatre montures de module (6a, 6b, 6c, 6d) qui forment ensemble un châssis de module (34), de préférence rectangulaire, qui fait le tour du module photovoltaïque (2),
- les montures de module (6a, 6b, 6c, 6d) étant en particulier assemblées, pour cela, en plusieurs points d'assemblage (42) pour former le châssis de module (34)
- un écartement (36a) d'une pointe (35) d'une monture de module supérieure (6a) disposée sur une face supérieure du module photovoltaïque (2) étant plus grand qu'un écartement (36c) d'une pointe (35) d'une monture de module inférieure (6c) disposée sur une face inférieure du module photovoltaïque (2), par rapport à la surface active (9) dans les deux cas.

10. Kit selon l'une des revendications précédentes, dans lequel le bord (14) du module photovoltaïque (2) est
- retenu par serrage
- et/ou collé dans le logement (13), en particulier à l'aide d'un ruban adhésif,
- de préférence collé de façon étanche au moyen d'un produit d'étanchéité (41).

11. Kit selon l'une des revendications précédentes, dans lequel une pointe (35) du bras antérieur (17) et/ou du bras postérieur (16) forme l'extrémité côté module (52) de la monture de module (6),
- l'extrémité côté module (52) se trouvant de préférence à l'intérieur de l'angle d'occultation (29).

12. Installation photovoltaïque (1) avec
- une structure portante (3), sur laquelle plusieurs modules photovoltaïques bifaciaux (2) sont disposés verticalement,
- dans laquelle la structure portante (3) comporte plusieurs montants (4) qui sont fixés, en particulier ancrés, sur ou dans la terre, et dans laquelle sont fixées sur les montants (4) des barres (5) qui relient chacune deux montants (4) voisins l'un à l'autre,
**caractérisée en ce que**
- les modules photovoltaïques (2) sont conçus comme des stratifiés sans cadre et fixés chacun au moyen d'au moins une monture de module (6) correspondante sur la structure portante (3) et
- **en ce que** chaque module photovoltaïque (2) bifacial et sans cadre et l'au moins une monture de module (6) correspondante forment respectivement un kit (1) conçu selon l'une des revendications 1 à 11.

13. Installation photovoltaïque (1) selon la revendication précédente, dans laquelle chaque kit (1) formé par un module photovoltaïque (2) et l'au moins une monture de module (6) correspondante
- comprend une monture de module (6) qui est fixée sur l'un des montants (4), de préférence au moyen d'éléments de fixation séparés (37), et/ou
- comprend une monture de module (6) qui est fixée en dessous de l'une des barres (5), de préférence au moyen d'éléments de fixation séparés (37), et/ou
- comprend une monture de module (6) qui est fixée au-dessus de l'une des barres (5), de préférence au moyen d'éléments de fixation séparés (37).

14. Installation photovoltaïque (1) selon l'une des revendications 12 à 13, dans laquelle la structure portante (3) comprend des barres (5) sur la face inférieure desquelles une face inférieure d'une monture de module (6) de l'un des kits (1) est accrochée, de préférence au moyen d'éléments de fixation séparés (37), et/ou comprend des barres (5) sur la face supérieure desquelles une monture de module (6) de l'un des kits (1) est fixée, de préférence au moyen d'éléments de fixation séparés (37), et
- dans laquelle une section de chaque barre (5) transversale par rapport au sens longitudinal (48) de la barre (5) est choisie de telle manière qu'un angle d'incidence maximal sans occultation (23, 24) correspondant, sous lequel un rayon de soleil incident (20, 21) respectif peut atteindre la surface active (9) du module photovoltaïque (2) depuis la face avant (12) ou la face arrière (11), soit fixé par un contour extérieur (22) de la monture de module (6).

15. Installation photovoltaïque (1) selon l'une des revendications 12 à 14, dans laquelle les barres (5) sur la face inférieure desquelles un des kits (1) est monté sont formées au moyen d'un profilé longitudinal semi-ouvert (53), de préférence sous la forme d'un profilé en C, et/ou
- dans laquelle certains des éléments de fixation (37) sont introduits dans des ouvertures de passage (49), de préférence en forme de fentes, sur la face inférieure de barres (5), pour fixer ainsi sur la barre (5) une monture de module (6) de l'un des kits (1) disposée sous la barre (5) et/ou
- dans laquelle les éléments de fixation (37) forment sur l'avant et l'arrière des pattes (50) respectives sur lesquelles la monture de module (6) du kit (1) correspondant est montée, de préférence serrée ou vissée.
